# EUROPÄISCHE PATENTSCHRIFT

(11) **EP 3 922 403 B1**
(45) Veröffentlichungstag und Bekanntmachung des Hinweises auf die Patenterteilung: **25.11.2026**
(21) Anmeldenummer: 20179114.2
(22) Anmeldetag: 09.06.2020
(51) Int. Cl.: B23Q 1/70, B23Q 17/09, G05B 19/4065

(54) **VERFAHREN ZUR ERFASSUNG EINER SCHNEIDENBELASTUNG EINES WERKZEUGES**
METHOD FOR DETECTING THE CUTTING LOAD OF A TOOL
PROCÉDÉ PERMETTANT DE DÉTECTER UNE CHARGE DE COUPE D'UN OUTIL

(43) Veröffentlichungstag der Anmeldung: 15.12.2021
(73) Patentinhaber: Franz Kessler GmbH, 88422 Bad Buchau (DE)
(72) Erfinder: VAN SPRANG, Joachim, 88213 Ravensburg (DE); WEING, Harald, 88400 Biberach (DE); WEIß, Daniel, 88518 Herbertingen (DE)
(74) Vertreter: RavensPAT Patentanwälte Partnerschaft mbB

(56) Entgegenhaltungen:
- EP-A1- 1 593 456
- EP-A1- 3 360 642
- US-B1- 6 301 520

## Beschreibung

Die Erfindung betrifft ein Verfahren zur Erfassung einer Schneidenbelastung einer einzelnen Schneide nach dem Oberbegriff des Anspruchs 1.

### Stand der Technik

Bei Werkzeugmaschinen gibt es unterschiedliche auswechselbare Vorrichtungen bzw. Werkzeuge, die über normierte Standard-Schnittstellen mit der Werkzeugmaschine verbunden sind. Vorwiegend handelt es sich hier um Werkzeuge, die über eine lösbare Kegelverbindung mit der Werkzeugmaschinenspindel bzw. Motorspindel verbunden werden und bei denen sogenannte Spannzangen durch eine axiale Bewegung geöffnet bzw. geschlossen werden, so dass die zur sicheren Befestigung des Werkzeugs notwendige Axialkraft auf das Werkzeug übertragen werden kann bzw. später auch wieder gelöst werden kann.

Die für die spanende Bearbeitung eingesetzten Werkzeuge können nur bis zum Erreichen einer typischen Verschleißgrenze eingesetzt werden, die üblicherweise vom Hersteller angegeben wird. Sind die eingesetzten Werkzeuge übermäßig und über die Verschleißgrenze hinaus verschlissen bzw. abgenutzt, so genügen die Bearbeitungsergebnisse in der Regel nicht mehr den Anforderungen. Um in den Fertigungsverfahren nicht etwa ein hohes Maß an Ausschuss zu produzieren, bis anhand einer Qualitätskontrolle der erhaltenen Werkstücke festgestellt wird, dass aufgrund eines verschlissenen Werkzeuges zum Beispiel Fertigungstoleranzen oder eine Maßhaltigkeit oder eine Kantenschärfe oder dergleichen nicht mehr eingehalten werden kann, wird angestrebt, den Werkzeugzustand in situ, d.h. während des Bearbeitungsverfahrens, überprüfen und nachhalten zu können.

Gemäß der EP 2 924 526 A1 und der WO 2019/101 617 A1 erfolgt dies mittels eines zur Werkzeugmaschine zusätzlichen Messgerätes mit entsprechender Messsensorik ausgestatteter Werkzeughalteradapter, auf dem Werkzeug lastende Biegemomente nach ihren in zwei linear unabhängigen, senkrecht zu der Rotationsachse stehenden und relativ zum rotierenden Werkzeug ortsfesten Richtungen orientierten Komponenten erfasst und als Wertepaare der so erfassten Komponenten in einem entsprechenden Koordinatensystem betrachtet werden. Bei diesem bekannten Vorschlag wird ein so erhaltenes Bild insbesondere im Hinblick auf erkannte Symmetrien und Störungen derselben hin betrachtet, wobei Störungen der Symmetrien als Abweichungen von einem Sollzustand erkannt und als Verschleiß zumindest einer Schneide eines mehrschneidigen Werkzeugs erfasst werden. Dieses System wird bereits unter der Marke "SPIKE" der Firma pro-micron GmbH & Co. KG angeboten.

Die hierbei spezifisch angegebene Darstellung von Wertepaaren von mit Dehnmessstreifen erfassten Biegemomentkomponenten erfolgt in zwei linear unabhängigen Richtungen, die senkrecht zur Rotationsachse des Werkzeugs liegen. Hiermit sollen der Zustand des Werkzeugs und Probleme mit dem Werkzeug für jede einzelne Schneide des Werkzeugs erkannt werden und dies anhand eines Verschleißkennwertes gekennzeichnet werden.

Abhängig vom Verschleiß der einzelnen Schneide soll dann frühzeitig z.B. ein Auswechseln des verschließenden Werkzeuges erfolgen, um v.a. ein Bruch der Schneiden/Schneidkanten bzw. Ungenauigkeiten der Bearbeitung und/oder Ausschuss des Werkstückes/Produktes möglichst zu vermeiden.

Nachteilig bei diesem bisherigen System ist jedoch vor allem der große konstruktive und wirtschaftliche Aufwand, der unter anderem mit dem zusätzlichen, separaten Adapter und dem zusätzlichen Auswertegerät bzw. Computer besteht. Hierbei erfolgt eine Integration der Messelektronik bzw. Sensorik in jeden einzelnen Werkzeughalter der Werkzeugmaschine, was zusätzlich die Kosten und den Aufwand erhöht. So ist auch die spontane Verwendung eines weiteren Werkzeughalters nur begrenzt möglich, sollte entsprechender Bedarf bestehen.

Bei diesem System werden die Sensordaten/-signale per Funk drahtlos vom Werkzeugadapter an das Auswertegerät bzw. den Computer übermittelt. Dies ist nicht nur aufwändig, sondern auch störanfällig, insb. unter den "rauhen" Bedingungen bei industrieller Spanbearbeitungen und den üblicherweise vorhandenen, unzähligen Störquellen in einer entsprechenden Produktionshalle.

Darüber hinaus wird bei diesem System bzw. durch den Adapter die wirksame Länge zwischen Kraftangriff (Bearbeitungskraft) und sog. HSK-Planfläche vergrößert. Daraus resultieren erheblich größere Lagerbelastungen durch die entsprechend vergrößerten Hebelverhältnisse dieses Systems, was ebenfalls nachteilig ist.

Darüber hinaus wird zwischenzeitlich auch eine Variante "SPIKE inspindle" angeboten. Hierbei wird eine spezielle Konushülse verwendet, die im Prinzip vor die Welle gesetzt wird. Zwar ist diese Variante nicht werkzeugabhängig, die zuvor genannten technischen und wirtschaftlichen Nachteile bleiben jedoch größtenteils bestehen.

Aus der US 6,301,520 B1, die die Basis für den Oberbegriff des Anspruchs 1 bildet, ist eine Spindel für Werkzeugmaschinen bekannt, wobei eine Messung des Abstands des Werkzeuges offenbart ist.

Unabhängig hiervon ist beim sog. "Tieflochbohren" ein sehr frühzeitiges und exaktes Erkennen von potentiell gefährlichem Verschleiß bzw. Veränderung an der einzelnen Schneide von entscheidender Bedeutung, um ein Brechen und Festsitzen eines Teils des Bohrers im Werkstück zu vermeiden. Dies könnte ggf. noch verbessert werden.

### Aufgabe und Vorteile der Erfindung

Aufgabe der Erfindung ist es eine motorisch angetriebene Werkzeugmaschineneinheit bzw. ein Verfahren zur Erfassung einer Schneidenbelastung vorzuschlagen, wobei der konstruktive und wirtschaftliche Aufwand gegenüber dem Stand der Technik möglichst verringert und/oder höhere Anforderungen erfüllt werden, insbesondere in Bezug auf die Genauigkeit der Bearbeitung und/oder der Sicherheit bei der Bearbeitung und/oder der frühzeitigen Erkennung von nachteiligem Verschleiß einer einzelnen Schneide.

Diese Aufgabe wird, ausgehend von einem Verfahren der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich. Dementsprechend ist ein erfindungsgemäßes Verfahren vor allem durch nachfolgende Merkmale gekennzeichnet,

Aufnahme wenigstens einer zeitlichen und/oder positionsbezogenen Abfolge der mit dem Einzel-Schneiden-Sensor und/oder Sensorkopf gemessenen Abstandswerte,
- Bestimmung einer Planlaufabweichung und/oder einer Rundlaufabweichung und/oder einer Winkeländerung und/oder eines Torsionsmomentes ausschließlich unter Berücksichtigung der zeitlichen und/oder positionsbezogenen Abfolge der gemessenen Abstandswerte zum Teil der/des relativ zum Einzel-Schneiden-Sensor und/oder Sensorkopf rotierenden Rotoreinheit/ Werkzeugaufnahmeeinheit/Spindelkopfes,
- wobei eine Markierung an der Rotoreinheit und/oder Werkzeugaufnahmeeinheit/Spindelkopf bereitgestellt wird,
- wobei der Einzel-Schneiden-Sensor und/oder Sensorkopf die Markierung an der Rotoreinheit beim Messen erfasst,
- wobei anhand der Erfassung der Markierung durch den Einzel-Schneiden-Sensor und/oder Sensorkopf die aktuelle Drehzahl/Geschwindigkeit der Rotoreinheit erfasst wird.

Das erfindungsgemäße Verfahren zur Prüfung bzw. Erfassung einer einzelnen Schneide weist vor allem die Vorteile auf, dass bei der eigentlichen Messung im Grunde kein Zeitverlust mehr entsteht und eine Messung uneingeschränkt zum Beispiel auch nach jedem Werkzeugwechsel oder Werkzeughalterwechsel durchgeführt werden kann. Auf diese Art und Weise lässt es sich auch einfacher in den Bearbeitungsprozess integrieren, zumal es nicht notwendig ist, eigens eine Zeitspanne vorzusehen, in der lediglich das Mess- bzw. Prüfverfahren durchgeführt werden kann bzw. muss.

Beispielsweise umfasst die Rotoreinheit und/oder die Werkzeugaufnahmeeinheit wenigstens diese Markierung und ggf. ein Messelement, insbesondere Messring. Beispielsweise kann die Rotoreinheit eigens für die Messung bzw. Erfassung ein Zusatzelement aufweisen, bezüglich dem die Messung durchgeführt wird bzw. zu dem der Sensor bzw. dessen Sensorkopf den Abstand misst. Je nach Art des Sensors/-kopfes kann somit der Messring die für die Messung vorteilhaften Eigenschaften aufweisen, z.B. aus einem entsprechenden Material gefertigt sein oder Messmarkierungen aufweisen. Durch die Größe des Messrings kann auch, ähnlich wie bei einem Hebel, die Wirkung verstärkt werden, d.h. eine geringe Deformation wirkt sich über eine größere Strecke stärker aus, sodass eine höhere Messempfindlichkeit und Messgenauigkeit erreichen werden kann. Im Falle von induktiven Sensoren, insbesondere Wirbelstromsensoren, kann es vorteilhaft sein, wenn das für den Messring verwendet Material zwar elektrisch leitend ist, zudem aber keine ferromagnetischen Eigenschaften aufweist, sondern nur die Induktion einer Spannung berücksichtigt werden muss. Der Messring kann zum Beispiel aus Aluminium gefertigt sein, das leicht ist und an der Oberfläche eine passivierende Oxidschicht bildet, also auch korrosionsbeständig ist.

Mit Hilfe des oben genannten Einzel-Schneiden-Sensors an/in der Statoreinheit wird erreicht, dass ein zusätzlicher separater Werkzeugadapter sowie ein zusätzliches Auswertegerät mit Darstellungseinheit/Bildschirm entbehrlich sein können. Zudem ist eine Teilung der Rotorwelle zur Integration des Einzel-Schneiden-Sensors wie z.T. beim Stand der Technik nicht notwendig. So wird v.a. der konstruktive und wirtschaftliche Aufwand gegenüber dem Stand der Technik deutlich verringert.

Im Sinn der Erfindung wird mit dem Einzel-Schneiden-Sensor eine Schneidenbelastung der einzelnen Schneide erfassbar, auch oder gerade in den Fällen, bei denen das Werkzeug nicht nur eine Schneide, sondern mehrere Schneiden am Werkzeugkopf aufweist. So umfassen derzeit handelsübliche Bohrer oftmals zwei einzelne Schneiden und handelsübliche Fräser vielfach vier einzelne Schneiden oder sogar mehr als vier einzelne Schneiden. Im Sinn der Erfindung können als Schneide bzw. Schneiden sowohl Schneidkanten als auch sog. Schneideinsätze bzw. sog. Schneidplatten verstanden werden. Schneideinsätze bzw. Schneidplatten bestehen oftmals bei handelsüblichen Werkzeugen aus Hartmetall, Cermet, polykristallinem kubischem Bornitrid (CBN), polykristallinem Diamant (PKD) oder Schneidkeramik oder seltener aus HSS bzw. HSSE/HSS-PM und dienen als Schneidstoffträger zur Zerspanung von beispielsweise Metallen, Kunststoffen oder Holz.

Demzufolge kann gemäß der Erfindung eine Veränderung wie ein Verschleiß bzw. eine Abnutzung und/oder ein Teil-/Bruch und/oder ein Ver-/Einklemmen der einzelnen Schneide und/oder mehrerer Schneiden in vorteilhafter Weise erfasst und be-/ausgewertet werden. Bei Bedarf kann auch vor allem mit Hilfe einer vorteilhaften elektrischen/elektronischen Kontrolleinheit eine vorteilhafte Maschinenreaktion wie z.B. ein Alarmieren bzw. Signalisieren und/oder Anzeigen und/oder ein Verlangsamen und/oder Beenden der Bearbeitung bzw. des Betriebes erfolgen.

Gemäß der Erfindung wird auch nicht die wirksame Länge zwischen Kraftangriff/Schneide (Bearbeitungskraft) und sog. HSK-Planfläche "verlängert". Damit ergibt sich im Vergleich zum oben genannten Stand der Technik eine erheblich geringere Lagerbelastung durch die in Bezug zum bisher bekannten System deutlich verkürzten Hebelverhältnissen. Dies wirkt sich positiv auf die Dimensionierung/Belastung der Lager aus.

Darüber hinaus wird gemäß der Erfindung v.a. durch die kürzere Ausspannlänge des Werkzeugs der Betrieb/Prozess im Allgemeinen positiv beeinflusst. Das Werkzeug hat eine höhere Steifigkeit, wodurch die Abdrängung des Werkzeugs im Betrieb/Prozess geringer ist als beim Stand der Technik. Positiv wird auch der Effekt des Ratterns beeinflusst. Durch die kürzere Werkzeuglänge beginnt das Werkzeug erst bei höheren Belastungen zu schwingen/rattern, was die Genauigkeit der Bearbeitung verbessert.

Grundsätzlich können aufgrund des Wegfalles von zusätzlichen Werkzeugadaptern gemäß der Erfindung die bislang handelsüblichen Werkzeuge und Werkzeughalter etc. ohne Umbau bzw. Veränderung verwendet werden. Auch bislang übliche bzw. eingesetzte Lagerungen entsprechender Maschineneinheiten wie Motorspindeln oder dergleichen müssen/können nicht verändert werden, was ebenfalls Kosten und Aufwand reduziert.

So kann die entsprechende Sensorik in der Werkzeugmaschineneinheit bzw. Motorspindel in vorteilhafter Weise integriert werden. Eine Integration der Messelektronik in jeden bzw. mehrere Werkzeughalter/-adapter und/oder in jedes zu überwachende Werkzeug für die Werkzeugmaschineneinheit entfällt somit. Auch wird in vorteilhafter Weise die Sensorik bzw. der Einzel-Schneiden-Sensor und/oder die Elektronik lediglich pro Maschineneinheit bzw. Motorspindel einmal benötigt/montiert bzw. verbaut. Dementsprechend gering sind die Kosten und Aufwendungen gemäß der Erfindung.

Vorzugsweise umfasst eine Maschinen-Kontrolleinheit und/oder Maschinen-Anzeigeeinheit die Verarbeitung bzw. Auswertung/Darstellung bzw. eine Sensor-Auswerteeinheit bzw. Sensor-Anzeigeeinheit zum Auswerten und/oder Aufbereiten und/oder Anzeige/Darstellung der (vorteilhaft aufbereiteten) Sensorsingale/Sensordaten. Dementsprechend wird zusätzlich der konstruktive und wirtschaftliche Aufwand gegenüber dem Stand der Technik deutlich verringert. Auch kann eine Integration der Verarbeitung der Sensorsignale/-daten in die bereits heutzutage immer vorhandene Maschinensteuerung bzw. Maschinen-Kontrolleinheit eine bessere, insb. schnellere Datenverarbeitung ermöglichen, da ein "Umweg" über ein separates Auswertegerät, d.h. meist auch eines anderen Herstellers, nicht erfolgt, sondern eine direkte Verarbeitung in/mit der Steuerung bzw. elektrischen/elektronischen Kontrolle der Maschine. Dies ist u.a. bei sehr kurzen Reaktionszeiten von großem Vorteil, wie z.B. vor einem (sensorisch erfassten) anstehenden Bruch der Schneide oder bei plötzlich auftretendem, unplanmäßigem Verklemmen eines Spans an einer der Schneiden des Werkzeugs.

Vorteilhafterweise ist der Einzel-Schneiden-Sensor als Einzel-Schneiden-Kraftsensor zur Erfassung einer Kraft-Beaufschlagung der einzelnen Schneide ausgebildet. Es hat sich in unzähligen Versuchen gezeigt, dass die Erfassung der Kraft, die auf die einzelne Schneide einwirkt bzw. die einzelne Schneide belastet/beaufschlagt, wesentlich direkter und vorteilhafter ist, als die Erfassung eines Biegemomentes auf/am Werkzeug bzw. Werkzeughalter. Gerade die axialen Belastungen bzw. Kraftbeaufschlagungen wie sie bei sehr vielen, häufig eingesetzten Werkzeugen, d.h. bei Bohrern, Stirnfräsern etc., auftreten/vorhanden sind, können deutlich besser/genauer erfasst und ausgewertet werden als dies im Vergleich hierzu mit erfassten Biegemomenten verwirklicht werden kann. Biegemomente des Werkzeuges bzw. Werkzeughalters resultieren üblicherweise im Wesentlichen aus radialen Belastungen bzw. Krafteinwirkungen, was jedoch gerade beim Bohren nur indirekt vorhanden ist.

Mit der vorteilhaften Kraftmessung gemäß der Erfindung können besonders exakte Resultate verwirklicht werden, d.h. es kann hiermit eine besonders gute Erfassung der Belastung bzw. Kraftbeaufschlagung der einzelnen Schneide realisiert werden, die z.B. mittels einer vorteilhafter elektronischer Kontrolleinheit weiterverwendet bzw. verarbeitet werden können.

In einer vorteilhaften Variante ist der Einzel-Schneiden-Sensor in axialer Richtung betrachtet zumindest teilweise in der Höhe von der Werkzeug-Spannvorrichtung und/oder der Werkzeugaufnahmeeinheit angeordnet. Dementsprechend ist der Einzel-Schneiden-Sensor in Richtung der Drehachse betrachtet neben bzw. in Höhe bzw. im Bereich der Werkzeug-Spannvorrichtung/Spannzange/Spannsegmente und/oder Werkzeugaufnahmeeinheit und insbesondere in radialer Richtung betrachtet außerhalb der bzw. an einem größeren Radius als die Werkzeug-Spannvorrichtung/Spannzange/Spannsegmente und/oder Werkzeugaufnahmeeinheit angeordnet. Hiermit können die durch die Belastung/Kraftbeaufschlagung der einzelnen Schneide/Schneiden hervorgerufenen Verlagerungen und/oder Materialverformungen des Gegenlagers/Anschlages bzw. der Spindelwelle bzw. der Werkzeugaufnahmeeinheit/Werkzeug-Spannvorrichtung in vorteilhafter Weise erfasst werden.

Beispielsweise ist der Einzel-Schneiden-Sensor als Verlagerungssensor und/oder Verformungssensor zum Erfassen einer durch die Schneidenbelastung der einzelnen Schneide erzeugten Verlagerung und/oder Verformung wenigstens eines Teils der Rotoreinheit und/oder der Werkzeugaufnahmeeinheit ausgebildet. Beispielsweise können durch die Belastung der einzelnen Schneide generierte (sehr kleine) Verlagerung der Welle und/oder Materialverformungen, insb. wenige Mikrometer, in vorteilhafter Weise verwendet/erfasst bzw. bewertet werden und vorzugsweise eine Steuerung/Kontrolle der Bearbeitung, insbesondere während des Betriebes bzw. der Spanbearbeitung, realisiert werden. Das heißt, dass in vorteilhafter Weise die Kraftbeaufschlagung und/oder der Verschleiß und/oder Schwingungen in axialer Richtung längs der Drehachse bzw. über den axialen Weg beurteilt/realisiert werden. So können völlig neuartige Möglichkeiten der Überwachung des Bearbeitungsvorganges von jeder einzelnen Schneide und somit eine entscheidend höhere Genauigkeit und Sicherheit der Bearbeitung verwirklicht werden.

Vorzugsweise ist der Einzel-Schneiden-Sensor als berührungslos arbeitender Sensor zur berührungslosen Erfassung der Schneidenbelastung der einzelnen Schneide und/oder durch die Kraft an der Schneide bzw. den Schneiden bewirkte Verlagerung der Welle ausgebildet. Hiermit kann eine Übertragungseinheit zur Übertragung des Sensorsignals bzw. der Messdaten von der rotierenden Rotoreinheit bzw. einem mit dem Werkzeug fest verbundener, rotierender Adapter oder dergleichen auf eine statische Auswerteeinheit und/oder auf die statische Statoreinheit entfallen. Dies verringert im Vergleich zum oben genannten Stand der Technik zusätzlich den konstruktiven und wirtschaftlichen Aufwand. Auch wird ein Abrieb oder Verschleiß von entsprechenden (berührenden bzw. schleifenden) Elementen der Sensorik wirkungsvoll verhindert und eine lange Lebensdauer ermöglicht.

Dementsprechend kann von der Erfassung bzw. "Informationsbeschaffung" die Weiterleitung der Daten/Signale bzw. Informationen in vorteilhafter Weise (vollständig) kabelgebunden bzw. mittels (elektrischer) Kabel/Leitungen und insbesondere im vorderen Abschnitt der Werkzeugmaschineneinheit bzw. der Motorspindel verwirklicht werden. Die Weiterleitung bzw. Übermittlung per Kabel/Leitung bzw. kabelgebunden ist wesentlich unanfälliger gegenüber Störungen oder Verzerrungen bzw. Fehlern der Übermittlung der sensiblen Daten/Signal bzw. deren geringen/kleinsten Änderungen von den einzelnen Schneiden des Werkzeuges während der Bearbeitung mit zum Teil sehr hohen Drehzahlen und damit sehr kleinen Zeitintervallen etc.

Vorteilhafterweise ist der Einzel-Schneiden-Sensor als Näherungssensor zum Erfassen eines Abstands zwischen Statoreinheit/Näherungssensor und wenigstens einem Teil der Rotoreinheit und/oder der Werkzeugaufnahmeeinheit ausgebildet ist, wobei dieser Abstand durch die Schneidenbelastung der einzelnen Schneide veränderbar. Hierbei kann in vorteilhafter Weise eine Erfassung/Messung des Abstandes und damit einer Abstandsänderung zwischen beweglich gelagerter Komponente/Welle der Rotoreinheit und dem Stator bzw. Statorkomponente/-gehäuse erfolgen und dadurch kann die Krafteinwirkung v.a. von jeder einzelnen Schneide detektiert werden. Hierdurch können vor allem auch hochfrequente (kleinste) Kraftänderungen präziser detektiert werden, unter anderem auch deshalb, weil durch einen vorteilhaften Messaufbau z.B. der relativen Messung diverse Umgebungsschwingungen herausgefiltert werden können. Sehr gut geeignet ist eine Messstelle am Festlager, also üblicherweise an der vorderen Seite der Motorspindel.

Dementsprechend kann in vorteilhafter Weise die durch die Werkzeug- bzw. Span-/Bearbeitung hervorgerufene Verlagerung und/oder Materialverformung, insb. der Rotorkomponente, erfasst werden, da sich durch diese ein Luftspalt bzw. ein Abstand zwischen der Rotoreinheit und der Statoreinheit verändert, d.h. verringert oder vergrößert. Diese Abstandsänderung kann zur mittelbaren Erfassung einer einzelnen Schneide des Werkzeuges bzw. deren Veränderung und/oder Zustand, wie z.B. Verschleiß/Abnutzung/Teil-Bruch, Ver-/Einklemmen eines Spans oder dergleichen, verwendet werden.

Beispielsweise ist der Einzel-Schneiden-Sensor als induktiver Sensor, insbesondere Wirbelstromsensor, und/oder optischer und/oder magnetischer Sensor/Hallsensor und/oder als Ultraschall-Sensor und/oder Radarsensor ausgebildet. Entsprechende Sensoren können als bereits handelsübliche und bewährte Sensoren erworben und gemäß der Erfindung verwendet bzw. eingesetzt werden. Dies verbessert die Wirtschaftlichkeit und Zuverlässigkeit der Erfassung.

Gerade auch eine Ausbildung des Einzel-Schneiden-Sensor als berührungsloser und/oder kontaktloser Sensor gewährleistet eine besonders vorteilhafte Erfassung der Verlagerung und/oder Verformung und Generierung sowie ggf. Weiterleitung vorteilhafter Sensorsingale bzw. Messdaten. Hierbei wird in vorteilhafter Weise ein zu erfassender Abstand/Luftspalt zwischen Rotoreinheit und Statoreinheit sich verändern/verkleinern. Hierfür sind induktive Sensoren mit wenigstens einer Messspule, magnetische Sensoren mit einem magnetischen bzw. magnetisierbaren Material/Element und/oder optische Sensoren mit einem Lichtwellensender und/oder - empfänger und/oder -reflektor, z.B. der/die sich verformende Abschnitt/Oberfläche der Rotoreinheit/Werkzeug-Spannvorrichtung/Spindelwelle, von besonderem Vorteil. Beispielweise kann sichtbares Licht, Laserlicht, UV- oder Infrarot-Licht und/oder ein optisches Interferometer oder dergleichen verwendet werden, um z.B. die Abstandsänderung zu erfassen.

Bevorzugt ist der Einzel-Schneiden-Sensor als Axial-Sensor mit wenigstens einem in Längsrichtung der Drehachse ausgerichteten Erfassungsbereich ausgebildet. Es hat sich gezeigt, dass axiale Belastungen bzw. Kraftbeaufschlagungen der Werkzeug-Schneide bzw. Schneiden eine (geringe) axiale Verlagerung und/oder Verformung des Gegenlagers/Anschlags bzw. der Rotor-/Spindelwelle generiert. Das durch die Bearbeitung generierte axial ausgerichtete Zusammendrücken des Gegenlagers/Anschlags bzw. der Rotor-bzw. Spindelwelle und/oder deren Komponenten kann mit dem vorteilhaften Axial-Sensor erfasst werden. Je nach Anordnung/Ausbildung des Axial-Sensors kann sich hierbei ein zu erfassender Abstand/Luftspalt entweder vergrößern oder verkleinern.

In einer vorteilhaften Variante ist der Einzel-Schneiden-Sensor als Radial-Sensor mit wenigstens einem senkrecht zur Längsrichtung der Drehachse ausgerichteten Erfassungsbereich ausgebildet. Hiermit kann in vorteilhafter Weise entsprechend durch die Bearbeitung generierte Verlagerung und/oder radiale Verformung des Gegenlagers/Anschlags einer Komponente der Rotoreinheit und/oder der Spindelwelle mit dem vorteilhaften Radial-Sensor erfasst werden.

Generell kann mit Hilfe des entsprechenden Einzel-Schneiden-Sensors im Fall einer Beeinträchtigung und/oder eines Bruches und/oder einer Verschmutzung bzw. nachteiligen Veränderung der einzelnen Schneide bzw. mehrerer Schneiden die Verwendung lediglich eines einzigen Sensors bereits von Vorteil sein. So kann beispielsweise im Fall eines Bruches eines der (vier/sechs) Schneiden während der Bearbeitung, d.h. im rotierenden Betrieb bzw. bei rotierender Rotoreinheit/ Spindelwelle/Motorspindel, dieser eine Sensor gemäß der Erfindung bereits die Änderung/Beeinträchtigung einer/jeder einzelnen Schneide erfassen. Denn die durch die Veränderung/Verringerung bzw. den Wegfall der entsprechenden Verlagerung und/oder Verformung an der Stelle der bisherigen und/oder normalen/normierten Detektion/Bereiche wird dies spätestens bei/nach einer ganzen Umdrehung der Welle/Rotoreinheit erfassbar.

Auch kann zum Beispiel eine Verschmutzung bereits einer der vorzugsweise mehreren Schneiden sogar zu Beginn der Bearbeitung bzw. Spanbearbeitung des Werkzeuges mit einem einzigen Einzel-Schneiden-Sensor in vorteilhafter Weise erfasst werden. Denn beim Anfahren/Anlaufen bzw. spätestens nach einer ganzen Umdrehung der Rotoreinheit/Spindelwelle kann z.B. ein Span bzw. ein Schmutzpartikel, der zwischen einer einzelnen Schneide und dem Werkstück ist bzw. eingeklemmt wurde, zu einer erfassbaren Änderung der Verlagerung und/oder Verformung, insbesondere zu einer größeren bzw. stärkeren Ortsverlagerung und/oder Materialverformung an dieser besonderen Stelle der Rotoreinheit führen. Dies kann gemäß der Erfindung erfasst und weiterverarbeitet/-verwendet werden, z.B. zur Kontrolle bzw. Steuerung und/oder zum Bremsen/Stoppen der Rotoreinheit bzw. der Spindelwelle/Motorspindel.

Generell ist ein vorteilhaftes Signalisieren einer erfassten Änderung der Verlagerung und/oder Verformung, d.h. v.a. einer Abweichung der erfassten Ist-Position und/oder Ist-Verformung von der (zu erwartenden) Soll-Position und/oder Soll-Verformung, für die Bedienperson der Werkzeugmaschine hilfreich. Vorzugsweise werden eine Signalsäule und/oder eine Anzeige eines Displays/Bildschirms aktiviert, so dass die Bedienperson auf die Änderung bzw. Beeinträchtigung hingewiesen wird und nach dem Fehler bzw. der Veränderung schaut und diese beseitigt. Hiermit wird eine deutliche Steigerung der Qualitätssicherung bzw. der Vermeidung von Ausschuss erreicht.

Beispielweise mit einem vorteilhaften Drehgeber oder dergleichen kann eine Ermittlung und ggf. Anzeige/Benennung der/des einzelnen Schneide/Schneidensegmentes realisiert werden. Alternativ oder in Kombination hierfür kann auch eine (grafische) Darstellung/Aufarbeitung in einem/ein Koordinatensystem, insb. kartesischen oder Polar-Koordinatensystem, verwirklicht werden. Gegebenenfalls wird das entsprechend verwendete Werkzeug bzw. die Schneide/Schneiden virtuell an einer Anzeige bzw. Bildschirm/Display angezeigt und hierbei in vorteilhafter Weise die Schneide/Stelle bzw. Position der erfassten/festgestellten Veränderung/Beeinträchtigung wie Abnützung/Verschleiß und/oder Bruch bzw. Bruchgefahr einer Schneide oder eines Teils einer Schneide und/oder eingeklemmter Span an einer Schneide etc..

Vorzugsweise (sofort bzw. unmittelbar) nach/bei/während der Erfassung einer Veränderung der Verformung und/oder einer Abweichung der erfassten Ist-Position und/oder Ist-Verformung von einer (gespeicherten/definierten) Soll-Position und/oder Soll-Verformung kann mittels einer elektrischen Kontroll- bzw. Steuereinheit ein Anhalten/Bremsen bzw. Stoppen der Rotoreinheit generiert werden, insbesondere sogar bereits vor einem Werkzeugbruch oder dergleichen, so dass keine Ungenauigkeit bzw. Nachteile bei der Bearbeitung des Werkstückes entstehen können, insbesondere bzgl. der Genauigkeit.

Vorteilhafterweise sind wenigstens zwei oder mehrere Einzel-Schneiden-Sensoren in Umfangsrichtung, insbesondere an zueinander verschiedenen Winkelpositionen um die Drehachse herum und/oder symmetrisch um die Drehachse herum angeordnet. Hiermit kann die Änderung z.B. der oben genannten Verlagerungen und/oder Verformungen und zudem ein Schwingen der rotierenden Rotoreinheit, insbesondere der Spindelwelle bzw. Motorspindel, in vorteilhafter Weise erfasst werden. Vorzugsweise (sofort bzw. unmittelbar) nach/bei/während der Erfassung einer Veränderung des Abstandes bzw. der Schwingungen der rotierenden Rotoreinheit, insbesondere der Spindelwelle bzw. Motorspindel, und/oder einer Abweichung der erfassten Ist-Schwingungen von (gespeicherten/definierten) Soll-Schwingungen kann mittels einer elektrischen Kontroll- bzw. Steuereinheit ein Anhalten/Bremsen bzw. Stoppen der Rotoreinheit generiert werden, so dass keine Ungenauigkeit bzw. Nachteile bei der Bearbeitung des Werkstückes entstehen können, insbesondere bzgl. der Genauigkeit.

Die Erfindung betrifft in vorteilhafter Weise die Erfassung, der durch die Kraftbeaufschlagung bzw. Belastung einer einzelnen Schneide des Werkzeuges hervorgerufenen elastischen Verlagerungen und/oder Verformungen der im Kraftfluss befindlichen Bauteile einer Bearbeitungsspindel bzw. Motorspindel. Hierbei ist es von Vorteil, dass die aufgrund der Schneidkraft hervorgerufenen Verlagerungen und/oder Verformungen im/während dem Betrieb gemessen werden können und sich in Bezug auf jede einzelne Schneide damit Rückschlüsse auf das sichere und genaue Bearbeiten des Werkstückes ziehen lassen.

Grundsätzlich können Referenzmessungen jederzeit durchgeführt werden. Es kann sich auch anbieten, in regelmäßigen Abständen Messungen durchzuführen und gegebenenfalls aktuellere Datensätze als Referenzmessungen zu verwenden. Eine Referenzmessung im Neuzustand bzw. im gereinigten Zustand hilft den Ist-Zustand ohne großen Aufwand bzw. ohne Abnützungen bzw. Schneidenveränderungen zu erhalten bzw. abzuspeichern, insb. in einer Datenbank bzw. einem Speichermedium. Eine Neuaufnahme von Referenzmessungen kann aber dazu verwendet werden, zu überprüfen, ob durch regelmäßigen Betrieb, Abnutzungen oder dergleichen die Abstandswerte sich generell verändern.

Entgegen einem technischen Vorurteil ist es nicht zwingend notwendig, zwei Sensoren zu verwenden, die einen Zustand zum Beispiel an verschiedenen Winkelpositionen in einer Ebene senkrecht zur Drehachse vermessen, um Auslenkungen an verschiedenen Winkelpositionen zu bestimmen und die Daten für die Auswertung verwenden zu können. Vielmehr genügt eine Messung an einer einzigen Winkelposition z.B. mit einem einzigen Sensor, wobei in vorteilhafter Weise der Vergleich zu einem Sollwert berücksichtigt wird.

Bei einem Ausführungsbeispiel der Erfindung können die Markierung und/oder der Messring beispielsweise auf den Spindelkopf aufgesetzt sein. Denkbar ist auch, dass Spindelkopf und Messring bzw. Markierung einteilig ausgebildet sind, d.h. miteinander fest verbunden oder aus einem Material gefertigt sind. Die zuletzt genannte Ausführungsform bietet sich aus Fertigungsgründen zum Beispiel an, wenn Spindelkopf und Messring bzw. Markierung aus dem gleichen Material gefertigt sein können. Ferner bietet ein Messring den Vorteil, dass auch Referenzmarkierungen nahezu beliebig angebracht werden können, ohne dass die Funktionalität der Rotoreinheit beeinträchtigt wird, wodurch die Qualität der Messung verbessert werden kann.

Wird eine Abfolge von Messwerten aufgenommen und z.B. mit einer weiteren Abfolge von Messwerten verglichen, so ist vorteilhafter weise die Phasenbeziehung zwischen beiden Abfolgen bzw. Serien von Messwerten bekannt. Zumindest sollte die Zuordnung der zu vergleichenden Messwerte so erfolgen, dass eine konstante Phasenbeziehung vorliegt, damit die Auswertung aussagekräftige Ergebnisse liefern kann. In der Regel ist es vorteilhaft, wenn zwischen zwei in der jeweiligen Abfolge aufeinanderfolgenden Messwerten jeweils stets eine konstante Zeitspanne zwischen den Messungen lag und/oder sich die Rotoreinheit um den gleichen Winkel gedreht hat, sodass anhand der Messung die Winkelunterschiede zwischen den Positionen, an denen gemessen wurde, nachvollzogen werden können. In vorteilhafter Weise kann bei einer Weiterbildung der Erfindung bei der Aufnahme der Abfolge von Abstandswerten ein Initialpunkt gesetzt werden. Zu diesem Zweck weist der Messring in vorteilhafter Weise eine Referenzmarkierung auf, etwa in Form einer Nut, einer Bohrung, einer sonstigen Ausnehmung oder einer Erhebung. Denkbar ist grundsätzlich auch eine optische Markierung.

Die Abstandswerte werden in vorteilhafter Weise nur von einem Sensorkopf aufgenommen. Die Referenzmarkierung kann, etwa im Falle einer Ausnehmung oder Erhebung, den Abstand so verändern, dass die Prüfungsvorrichtung dies als Initialpunkt erkennt. Es ist aber auch denkbar, die Erfassung des Initialpunkts allein auf andere sensorische Weise durchzuführen, etwa durch eine optische Markierung. Diese kann von einem separaten Triggersensor erfasst werden, der sonst aber keinen Abstandswert für die Auswertung liefert, d.h. keinen zusätzlichen Sensorkopf im Sinne der Erfindung zur Abstandmessung darstellt.

Eine optische Markierung kann den Vorteil bieten, dass sie an einem schnell rotierenden Bauteil mit geringerer Unwucht verbunden sein kann. Zudem kann noch deutlicher zwischen einer Abweichung durch einen Planlauffehler und dem Initialpunkt unterschieden werden, wenn die Referenzmarkierung nicht auch als Deformation interpretiert werden kann, wie dies bei einer Nut oder einer Erhebung der Fall ist.

Es sind grundsätzlich verschiedene Sensorarten für die Erfassung der Markierung bzw. des Messelementes/-ringes denkbar, die für den Sensor bzw. Sensorkopf infrage kommen und mit denen der Abstand zur Rotoreinheit und/oder zum Messring bzw. zur Markierung bestimmt werden kann. Vorzugsweise können auch hier berührungslose Abstandssensoren verwendet werden, da der Sensor bzw. Sensorkopf in vorteilhafter Weise an der Statoreinheit eingebaut ist und der Abstand zu einem Teil der Rotoreinheit bestimmt werden soll. Bevorzugten wird auch hier ein Wirbelstromsensor verwendet, der insbesondere in der Regel unempfindlich gegenüber Öl, Wasser oder nichtmetallischem Staub ist, womit im Betrieb der Werkzeugmaschine durchaus gerechnet werden muss. Ein Wirbelstromsensor kann als induktiver Sensor angesehen werden. Es sind aber auch Ausführungsbeispiele mit kapazitiven oder optischen Sensoren zur Erfassung der Markierung bzw. des Messringes denkbar.

In vorteilhafter Weise kann, bei der ein Wirbelstromsensor verwendet wird, der Messring aus einem nicht ferromagnetischen Material, z.B. einem paramagnetischen Material gefertigt sein, wodurch auch die Messgenauigkeit gesteigert werden kann, da ein ferromagnetisches Material stets unter dem Einfluss der in der Werkzeugmaschine vorherrschenden Magnetfelder steht. Ein ferromagnetisches Material wird daher, wenn es einem Magnetfeld ausgesetzt war, etwa eine gewisse Remanenz behalten, auch wenn kein äußeres Feld mehr vorliegt. Wenn eine Magnetisierung des Messrings bzw. des Teils der Rotoreinheit, zu welcher der Abstand bestimmt wird, die Messung beeinflussen kann, sollte eine ferromagnetisches Material vermieden und z.B. ein Wirbelstromsensor gewählt werden.

Zur Auswertung ist es generell von Vorteil, die Differenz der aktuellen Messwerte und der jeweiligen Referenzwerte zu bestimmen, um die Abweichungen erkennen und auswerten zu können. Da eine zeitliche Abfolge von Abstandswerten zur sich drehenden Rotoreinheit aufgenommen werden, kann über eine Fourier-Transformation das Messsignal in ein kontinuierliches Spektrum zerlegt werden. Im Ergebnis werden die geometrischen Abweichungen, also abweichende Abstandswerte, zugeordnet nach der Häufigkeit, mit der sie erscheinen, dargestellt. Wenn größere, vor allem singulär auftretende geometrische Abweichungen im Spektrum zu sehen sind, kann in der Regel von einem Planlauffehler ausgegangen werden.

Üblicherweise gehört in der Regel die sich gegenüber der Statoreinheit drehende Rotoreinheit zu einem Motorspindel-Antrieb. Das eigentliche spanende Werkzeug (Fräser, Bohrer usw.) wiederum wird in einem Werkzeughalter, der/die wiederum in einer Werkzeugspannvorrichtung angeordnet ist, gehalten bzw. verspannt, welche als Teil des Spindelkopfes der Rotoreinheit anzusehen ist. Die Werkzeugspannvorrichtung besitzt zu diesem Zweck eine Halterung für einen Werkzeughalter. Die Werkzeugspannvorrichtung wird mit einer Spannkraft beaufschlagt und in Längsrichtung der Drehachse verstellt. Ein Teil der Spannvorrichtung kann dabei etwa in eine sich verjüngende Aufnahme gezogen werden, sodass der Werkzeughalter bzw. das Werkzeug wiederum u.a. mit einer radial wirkenden Kraft geklemmt werden kann. Durch Lösen der Spannkraft wird das verspannte Werkzeug wieder gelöst werden und kann der Werkzeugmaschine entnommen bzw. gewechselt werden.

Im Allgemeinen ist der eigentliche Sensor in einem sog. Sensorkopf untergebracht; der Sensor misst seinen Abstand zur Rotoreinheit, wobei der Sensor selbst in der Statoreinheit entsprechend angeordnet ist. Die Sensordaten werden mit einer Elektronikeinheit bzw. einer Auswerteelektronik verarbeitet bzw. ausgewertet, welche rechnergesteuert sein kann.

Der wenigstens eine Sensorkopf ist grundsätzlich an der Statoreinheit an einer festen Position im Bereich der Werkzeugspannvorrichtung angeordnet und kann sowohl stirnseitig am rotierenden Spindelkopf und/oder seitlich messen/erfassen.

Grundsätzlich können Sensoren bzw. Sensorköpfe aber auch positionsvariabel angeordnet sein. In der Regel führt beispielsweise ein zwischen Werkzeug und Werkstück eingeklemmter Span dazu, dass das Werkzeug nicht mehr exakt zentrisch/gerade um die Drehachse läuft bzw. dass die Werkzeugspannvorrichtung leicht (auch elastisch) verformt wird und ein unveränderter Rundlauf, ein unveränderter Planlauf des Werkzeugs bzw. Werkzeughalters oder ein Laufen ohne Winkeländerung nicht mehr gewährleistet werden kann. Eine Störung des Rundlaufs stellt in der Regel eine besondere Beeinträchtigung der Bearbeitung dar. Derartige Verlagerungen und/oder Verformungen treten im Allgemeinen sowohl seitlich als auch stirnseitig/axial auf und sind dort auch grundsätzlich detektierbar. Stirnseitig wird ein Abstand parallel zur Drehachse gemessen, seitlich ein Abstand, der radial zur Drehachse verläuft. Alle derartigen Verlagerungen und/oder Verformungen bis hin zu Verschiebungen der Rotoreinheit können auf diese Art und Weise festgestellt werden.

Eine Messung kann grundsätzlich in einem 90°-Winkel zur Oberfläche und/oder zur Drehachse der Rotoreinheit erfolgen, aber auch in einem davon abweichenden Winkel.

Gerade bei Werkzeugmaschinen werden hohe Anforderungen an die Bearbeitungsgenauigkeit gestellt. Das Werkzeug und damit die Schneide/Schneiden müssen bei der Bearbeitung in genau definierter Weise im Werkzeughalter bzw. in der Werkzeugspannvorrichtung eingesetzt sein und bewegt werden, damit das zu bearbeitende Werkstück innerhalb der vorgegebenen Toleranzgrenze bearbeitet wird. Auch dann, wenn die Werkzeugmaschine und insbesondere die Werkzeugspannvorrichtung mit der notwendigen Präzision gefertigt sind, kommen beim Einsatz der Maschine zusätzliche Faktoren hinzu, welche es verhindern können, dass ein definierter Rundlauf/Planlauf weiterhin gegeben ist oder keine Winkelfehler auftreten. Im Betrieb der Maschine können z.B. die bei der Bearbeitung auftretenden Späne am Werkzeug haften bleiben oder verklemmen und dafür sorgen, dass das Werkzeug nicht in der eigentlichen Soll-Position rotiert.

Da der Verschleiß der Schneide/Schneiden und/oder die Späne mitunter sehr klein sind, sind diese Fehler/Abweichungen vom (normalen) Soll-Zustand oftmals schwer festzustellen und treten auch in zufälliger Art und Weise auf. Dennoch können derartige Planlauffehler bzw. Winkelfehlstellungen des Werkzeugs dazu führen, dass das Werkstück nach der Bearbeitung außerhalb der Toleranzgrenzen liegt.

Der Sensor/-kopf misst eine zeitliche bzw. positionsbezogene Abfolge von Abstandswerten. Nimmt der Sensor/-kopf eine zeitliche Abfolge von Abstandswerten auf, so handelt es sich bei dieser in der Regel gleichzeitig um eine positionsbezogene Abfolge, weil die Rotoreinheit in einer zeitlichen Folge gedreht wird, es sei denn, dass zwischen der Aufnahme einzelner Messwerte stets exakt eine volle Drehung oder mehrere ganzzahligen Drehungen durchlaufen wurden. Im Allgemeinen können erfindungsgemäß nicht nur Veränderungen des Planlaufs bestimmt werden, sondern zum Beispiel auch die Winkelstellung im Rundlauf. Denkbar ist auch das Torsionsmoment zu bestimmen, wenn sich z.B. eine Schneidenlage (Phase) im Bezug zu einer vorteilhaften Markierung, z.B. einer Referenznut etc., (stark) ändert im Laufe des Bearbeitungsvorganges wie des Fräsens etc., z.B. beim Auskoffern oder dergleichen. Hierbei könnte der Torsionswinkel in Abhängigkeit der Werkzeuglänge einbezogen werden.

Mit Hilfe der o.g. erfindungsgemäß verwendeten Markierung an der Rotoreinheit bzw. an einer vorteilhaften Stelle auf der Rotorwelle wird ermöglicht, dass auch bei unbekannter Drehzahl bzw. Winkelgeschwindigkeit eine Referenzmarkierung verwendet werden kann und eindeutig detektierbar wird, wann exakt eine Umdrehung der Rotoreinheit durchlaufen ist. Dies ist insbesondere dann von Vorteil, wenn unabhängig von anderen Sensoren ein Planlauf- oder Winkelfehler bestimmt werden soll, ohne dass in die Auswertung ein gesonderter Drehgeber mit einbezogen wird. Diese Markierung kann vorzugsweise vom Sensor/ Sensorkopf bzw. den Sensorköpfen bei dem eigentlichen Messvorgang gleichzeitig miterfasst werden. Es wird also kein weiterer Sensor grundsätzlich hierfür benötigt. Denkbar ist aber auch, dass ein zusätzlicher Sensor zur separaten Erkennung der Markierung bereitgestellt wird, insbesondere wenn die Abstandsmessung von der Markierungserkennung unabhängig bleiben soll.

Es besteht auch die Option, bei einer Variante der Erfindung mehr als eine Markierung, insbesondere am Messring, anzubringen. Auf diese Weise können noch weitere Informationen durch die Messung gewonnen werden, die z.B. eine Erfassung der Drehrichtung, Signalausrichtung oder eine Synchronisierung ermöglichen. Um bei der Erfassung der Markierung zusätzliche Informationen zu erhalten, kann die Markierung z.B. auch eine besondere Form aufweisen, z.B. ein schiefwinkliges Trapez, sodass hieraus etwa die Drehrichtung erkennbar ist.

Da mittels der Markierung auch die aktuelle Drehzahl bzw. Geschwindigkeit der Rotoreinheit erfasst werden kann, wird durch sie auch die Genauigkeit der Fehlermessung gemäß dem erfindungsgemäßen Verfahren nicht unmaßgeblich beeinflusst. Während es bislang notwendig war, diese Messung bei konstanter Drehzahl durchzuführen, um die Messwerte entsprechend miteinander vergleichen und in Beziehung setzen zu können, stellt die Erfindung darauf ab, diese ansonsten benötigte Zeitspanne einzusparen und zum Beispiel eine aussagekräftige Messung während einer (positiven oder negativen) Beschleunigung der Rotoreinheit durchführen zu können.

Dementsprechend kann eine erste bzw. zweite Abfolge von Abstandswerten in der Regel außerhalb des Markierungsbereichs aufgenommen werden. Da diese Messungen jedoch während einer Beschleunigungsphase der Rotation der Rotoreinheit erfolgen, können diese Abstandswerte zunächst nicht ohne Weiteres in Beziehung gesetzt werden, weil die zeitliche Abtastung in der Regel mit einer vorgegebenen Taktrate, also in gleichen Zeitabschnitten, erfolgt, die beschleunigte Rotoreinheit aber zwischen zwei aufeinanderfolgenden Takten sich unterschiedlich weit dreht und daher die Positionen, insbesondere bei wenigstens zwei Abfolgen von Messungen nicht mehr übereinstimmen. Allerdings erfolgt die Bearbeitung typischerweise bei konstanten Drehzahlen/Geschwindigkeiten, kann jedoch auch in einer (zuvor beschreiben) Beschleunigungsphase erfolgen.

Die Weg-Zeit-Beziehung bzw. Winkel-Zeit-Beziehung wird wie folgt beschrieben: $s \left(t\right) = 0 , 5 {at}^{2} + {v}_{0} t ,$ wobei s(t) die zeitabhängige, in der Zeitspanne t zurückgelegte Wegstrecke bzw. den in der Zeitspanne t überstrichenen Winkelbereich, a die Beschleunigung, v₀ die aktuelle Drehzahl/Geschwindigkeit zum betrachteten Zeitpunkt am Anfang der Zeitspanne t.

Es können erfindungsgemäß Abfolgen von Messwerten aufgenommen werden. Dabei wird der Abstand des an der Statoreinheit befestigten Sensors/-kopfs zur Rotoreinheit bestimmt und gemessen, ob sich dieser Abstand beim Drehen der Rotoreinheit ändert. Um die Abfolgen jeweils miteinander vergleichen zu können bzw. die Daten auszuwerten (z.B. die Abfolgen subtrahieren zu können), müssen den Abstandswerten die jeweiligen Positionen zuordenbar sein. Gemessen wird aber in der Regel die Zeit während der Aufnahme der Abstandswerte.

Die Rotoreinheit wird zunächst beim Anfahren der Maschine beschleunigt. Diese Beschleunigung kann im Wesentlichen gleichmäßig erfolgen, d.h. a ist im Wesentlichen konstant. Es gibt aber, gerade beim Anfahren der Rotoreinheit, grundsätzlich auch nicht konstante Beschleunigungsphasen.

Zu Beginn des Anfahrprozesses ist in der Regel die Beschleunigung während eines bestimmten Zeitraums jedoch nicht konstant. Die Drehzahl in Abhängigkeit von der Zeit ist in diesem Bereich leicht linksgekrümmt, sog. S-Verschliff, d.h. die Rotoreinheit fährt etwas langsamer an, damit das Anfahren ruckfrei vonstattengeht. Man spricht auch von einer sog. Ruckbegrenzung. Daher ist es vorteilhaft, nicht vom Stillstand aus zu messen, sondern vielmehr in einem Bereich annähernd konstanter Beschleunigung.

Für jede Abfolge kann entsprechend ein Menge von Abfolgevektoren gebildet werden, welche:
- den gemessenen Abstandswert,
- die Zeitinformation zum Zeitpunkt der Messung des Abstandswertes und
- einen Drehzahl-/Geschwindigkeitswert enthalten, die sog. aktuelle Drehzahl bzw. Geschwindigkeit; wird die Rotoreinheit beschleunigt und erfolgt die Drehzahl-/ Geschwindigkeitsmessung über eine gewisse Zeitspanne, so werden in der Regel die gleichen zugeordneten aktuellen Drehzahl-/Geschwindigkeitswerte auch in wenigstens zwei Abfolgevektoren übereinstimmen.

Eine Skalierung wird in vorteilhafter Weise mathematisch unter der Bedingung durchgeführt, dass bei zwei zeitlich kurz hintereinander folgenden Messungen die quadratische Komponente der Bewegungsgleichung, also den auf die Beschleunigung zurückzuführenden Winkelanteil ausdrückt, vernachlässigt werden kann.

Eine derartige Linearisierung ist möglich, wenn die Zeitspanne zwischen der Messung zweier Abstandswerte nur klein genug gewählt wird. Dementsprechend werden der ersten und der zweiten Abfolge die aktuelle Drehzahl/Geschwindigkeit zugeordnet, auch wenn eine der Messungen später erfolgt ist und der tatsächliche Drehzahl-/Geschwindigkeitswert von dem zugeordneten, aktuellen Wert abweicht. Da der Term, in den die Zeit quadratisch einfließt und der die Beschleunigung beschreibt, wegfällt, ist somit eine lineare Skalierung mittels der Drehzahl bzw. Geschwindigkeit unter den gegebenen mathematischen Bedingungen möglich. Die Messung kann somit zum Beispiel auch während der Anlaufphase der Maschine durchgeführt werden. Die Zeitspanne, welche die Maschine zum Anlaufen benötigt, sei es eine kurze oder eine lange Zeitspanne, muss stets abgewartet werden, da in dieser Zeitspanne die genauen Vorgaben für den Bearbeitungsvorgang (etwa die Drehzahl des Werkzeugs) in der Regel noch nicht erreicht sind. Dennoch ist es besonders von Vorteil, wenn bereits beim Anfahren der Rotoreinheit festgestellt werden kann, ob zum Beispiel ein Planlauffehler bzw. Rundlauffehler oder ein Winkelfehler vorliegt, weil sodann auch gegebenenfalls der Vorgang unterbrochen und vor einer Bearbeitung eine Reinigung oder Neupositionierung des Werkzeugs durchgeführt werden kann. Bei einem Werkzeugwechsel z.B. ist in der Regel damit zu rechnen, dass eine Veränderung des Planlaufs, des Rundlaufs oder der Winkelstellung erfolgt. Wird diese Abweichung so groß, dass sie eine (gegebenenfalls vordefinierte) Schwelle überschreitet, liegt ein Fehler vor.

So kann also auch die Produktionszeit gesteigert werden, was unmittelbar auch mit Kostenvorteilen verbunden ist. In besonders vorteilhafter Weise wird die Rotoreinheit während der gesamten Aufnahme von Messwerten gleichmäßig beschleunigt. Auch dies vereinfacht noch einmal die Auswertung, wobei die Näherung lediglich darin besteht, den Beschleunigungsanteil aus dem Weg bzw. Winkel-Zeit-Diagramm zu vernachlässigen. Dies ist möglich, weil die aufeinander folgend gemessenen Messwerte sehr kurz hintereinander aufgenommen werden und somit deren zeitlicher Abstand bzw. Winkelabstand nur gering ist, d.h. der Beschleunigungsterm, der quadratisch bei gleichmäßiger Beschleunigung von der Zeit abhängt wird entsprechend vernachlässigbar klein.

Bei einem Ausführungsbeispiel der Erfindung wird also die Skalierung unter Berücksichtigung der Beschleunigung vorgenommen, indem aktuelle Drehzahlen/Geschwindigkeiten zu verschiedenen Zeitpunkten und die Zeitspanne zwischen den Drehzahl- bzw. Geschwindigkeitsmessungen bestimmt werden. Durch die Vernachlässigung des Beschleunigungsterms enthält das Weg-Zeit-Diagramm bzw. Winkel-Zeit-Diagramm einen linearen Term, der linear von der Zeit abhängt und in den als Konstante die Drehzahl/Geschwindigkeit (Bahngeschwindigkeit oder Winkelgeschwindigkeit), nicht die Beschleunigung einfließt. Die aktuelle Drehzahl/Geschwindigkeit kann je nach Ausführungsform der Erfindung in verschiedener Weise bestimmt werden. Es kann sich zum Beispiel anbieten, die aktuelle Drehzahl bzw. Geschwindigkeit anhand der Markierung zu bestimmen, indem die Zeit zwischen zwei aufeinanderfolgenden Detektionen der Markierung durch den Sensor/-kopf gemessen wird. Eine derartige Messung ist umso genauer, wenn die Markierung nur einen vergleichsweise schmalen Abschnitt in einem Winkelsegment ausmacht, idealerweise eine punktuelle Markierung darstellt. Darüber hinaus ist es denkbar, die Markierung so auszubilden, dass diese einen vorgegebenen Kreisbogenabschnitt einnimmt und die Zeit bestimmt wird, in der die Markierung, die sich über einen vorbekannten Winkelabschnitt erstreckt, den Sensorkopf passiert.

Ist zum Beispiel eine einzige Markierung vorgesehen, d.h. pro Umdrehung wird der Sensor/-kopf genau einmal von der Markierung passiert, so erfolgt eine aktuelle Drehzahl- bzw. Geschwindigkeitsmessung, indem gewissermaßen mit einer Ungenauigkeit einer Drehzahl-/Geschwindigkeitsänderung binnen einer Umdrehung eine aktuelle Drehzahl/Geschwindigkeit bestimmt wird. Unterschiede aufgrund der Beschleunigung innerhalb dieser Zeitspanne von einer Umdrehung werden sodann nicht berücksichtigt. Umgekehrt ist die Messung entsprechend genauer, wenn die Markierung nur einen Bruchteil des gesamten Umdrehungswinkels von 360° ausmacht und zum Beispiel bestimmt wird, wann der in Rotationsrichtung vordere Teil der Markierung in den Bereich des Sensorkopfs gelangt und der in Rotationsrichtung hintere Teil der Markierung anschließend den Sensorkopf passiert.

Zum Beispiel kann die Markierung einer Ausführungsvariante der Erfindung als Nut, etwa in einem eigens dafür an der Rotoreinheit angebrachten Messring, ausgebildet sein, sodass die Bereiche außerhalb der Nut und innerhalb der Nut unterschiedliche Abstandswerte aufweisen. Gemessen werden dann zum Beispiel die Flanken, die an den Rändern der Nut auftreten und sich die vom Sensorkopf gemessenen Abstandswerte entsprechend verändern, Die Nut kann grundsätzlich senkrecht bzw. radial zur Drehachse hin verlaufende oder abgeschrägte Flanken aufweisen.

Dementsprechend lässt sich der Verlauf bei der Messung der Abstandswerte durch den Sensor/-kopf verfolgen. Je nach aktueller Winkelgeschwindigkeit bzw. Bahngeschwindigkeit ist das Auftreten der Flanken in kürzeren oder längeren Zeitabständen zu beobachten. Insbesondere bei hoher Umdrehungszahl kann eine Näherung, die eine Linearisierung erlaubt, so vorgenommen werden, dass zum Beispiel die Messwerte der ersten bzw. zweiten zeitlichen und/oder positionsbezogenen Abfolge von Messwerten innerhalb einer Umdrehung der Rotoreinheit vorgenommen werden. In diesem Fall wird angenommen, dass die Drehzahl bzw. Geschwindigkeit innerhalb der Umdrehung konstant bleibt. Gerade bei hohen Umdrehungszahlen, wie sie bei Werkzeugmaschinen auftreten, ist diese Näherung durchaus mit geringeren Fehlern behaftet. Insbesondere am Ende der Anlaufphase sind höhere Winkelgeschwindigkeiten zu erwarten, sodass die Messung mit der vorgenommenen Abschätzung in diesem Bereich genauer ist als am Anfang der Anlaufphase.

Mit der Detektierung der Flanken an den Rändern einer Markierung, die einen gewissen Winkelabschnitt abdeckt, wird diese gewissermaßen in Teilmarkierungen unterteilt, sodass zum Beispiel mit dem Sensor/-kopf festgestellt werden kann, wann die Markierung in den Bereich des Sensorkopfs gelangt und den Bereich des Sensorkopfs wieder verlässt. So kann zum Beispiel gemessen werden, wann die Markierung jeweils in den Bereich des Sensorkopfs gelangt und die erste Flanke vom Sensorkopf erfasst wird. Dabei wird jeweils die Zeitspanne, die zwischen zwei Messereignissen liegt, bei denen die Markierung auftritt und jeweils den gleichen Abstandswert aufweist. Analog können Zeitpunkte verwendet werden, wenn die Markierung aus dem Bereich des Sensorkopfes wieder herausfährt. Auf diese Art und Weise kann eine Fehlerabschätzung vorgenommen werden, weil so für jeden Messpunkt, also für die beiden Punkte, bei denen der gleiche Abstandswert vorliegt, sich eine aktuelle Drehzahl bzw. Geschwindigkeit bestimmen lässt, gleichzeitig aber auch die Zeitspanne, die zwischen den beiden Punkten liegt, gemessen werden kann.

Die jeweiligen Drehzahlen/Geschwindigkeiten können, wie bereits oben dargestellt, bestimmt werden, also anhand einer über einen bestimmten Winkelbereich ausgedehnt Markierung oder anhand des Erscheinens der gleichen Markierung nach einer Umdrehung. Auf diese Weise wird abgeschätzt, wie sich die Geschwindigkeit mit der Zeit ändert, sodass hieraus ein Fehler abgeschätzt wird, der bei der Näherung auftritt, wenn bei zeitlich aufeinanderfolgenden Punkten davon ausgegangen wird, dass der Beschleunigungsterm vernachlässigbar ist.

Auf diese Weise kann in vorteilhafter Weise auch bestimmt werden, wie genau das Verfahren arbeitet und gegebenenfalls entsprechend angepasst werden. Bei einer vorteilhaften Anwendungsform der Erfindung können zeitliche bzw. positionsbezogene Abfolgen von Abstandswerten als Referenzmessung verwendet werden. Beispielsweise ist es denkbar, eine neue Werkzeugmaschine, einen neuen Werkzeughalter, ein neues Werkzeug, bei der/dem noch kein Span durch ein Bearbeitungsvorgang aufgenommen worden sein kann, entsprechend zu vermessen und eine erste Abfolge von Messwerten als Referenz aufzunehmen. Denkbar ist es auch, nach einem Reinigungsvorgang die Rotoreinheit mit gereinigtem Werkzeughalter laufen zu lassen, um eine entsprechende Referenzmessung herzustellen. Jegliche Abweichung von der Referenzmessung kann somit festgestellt werden, und es wird dann ausgewertet, ob die Abweichung so groß ist, dass ein Rundlauffehler, ein veränderter Planlauf oder ein Winkelfehler und damit eine Veränderung einer der einzelnen Schneiden vorliegen. Auf diese Art und Weise kann die Präzision der Bearbeitung deutlich verbessert werden. Die Messung der Betriebssituation stellt die Vergleichsmessung dar, die in Bezug zur Referenzmessung gesetzt wird.

Aufgrund des Kraftsignals kann auch ein eventueller Schneidenzustand abgeleitet/erfasst werden. Werkzeuge könnten gemäß der Erfindung nach tatsächlichem Verschleiß getauscht werden und nicht nach erfahrungsgemäßen Standzeiten, die üblicherweise vom Hersteller an/vorgegeben werden. Das spart wiederum Kosten im Werkzeugmagazin und Wartungsarbeiten der Spindel etc.. So können Werkzeuge länger gebraucht werden und Spindeln werden durch verschlissene Werkzeuge nicht überlastet.

Bei einer Abfolge von Abstandswerten kann die Markierung insbesondere als Initialpunkt gesetzt werden, um insbesondere bei der Differenzbildung und/oder der Fourier-Transformation die Abstandswerte unterschiedliche Abfolge einander zuordnen zu können. Insofern ist eine Referenzmessung vorteilhaft, da durch die Messung selbst feststellbar ist, wann eine vollständige Umdrehung erfolgt ist. Dies ist insbesondere dann von Vorteil, wenn das Verfahren durchgeführt wird, ohne dass von anderen Sensoren bzw. von der Maschinensteuerungen Werte über die Momentangeschwindigkeit bzw. -drehzahl an die Auswerteelektronik geliefert werden, sondern einzig die Werte des Sensorkopfes bzw. der Sensorköpfe diese Bestimmung durchführen.

Grundsätzlich kann bei einer Umdrehung das Abstandsprofil an sich vollständig aufgenommen werden. Es liegen jedoch sehr hohe Umdrehungszahlen vor, und in der Regel kann in vorteilhafter Weise auch mit einer vergleichsweise hohen Abtastrate gemessen werden. Ist zum Beispiel infolge eines eingeklemmten Spans und/oder infolge eines etwas verschlissenen/gebrochenen Werkzeugs bzw. dessen Schneiden ein Planlauffehler oder ein Winkelfehler vorhanden, so wird eine periodisch auftretende Abweichung feststellbar und der einzelnen Schneide zuordenbar sein. Um dies in vorteilhafter Weise auswerten/weiterverarbeiten bzw. realisieren zu können, bietet es sich u.a. an, z.B. eine Fourier-Transformation des Signals vorzunehmen, die insbesondere zur Vereinfachung der Auswertung als diskrete Fourier-Transformation, vorzugsweise als FFT oder DFT durchgeführt wird. Hierzu können die Werte der ersten und der zweiten Abfolge voneinander subtrahiert werden, wobei dazu die Positionen der Abstandsmessungen übereinstimmen müssen. Eine derartige Differenzbildung kann aber auch nach der Fourier-Transformation der jeweiligen Abfolgen erfolgen. Im Idealfall wären alle Abstandswerte identisch, sodass im Vergleich mit der Referenzmessung kein veränderter Planlauf, keine Beeinträchtigung des Rundlaufs oder keine veränderte Winkelstellung vorliegt. Aufgrund von statischen und systematischen Fehlern, allein bei der Messung, ist aber nicht zu erwarten, dass der Sensor/-kopf auch ohne veränderten Planlauf, ohne veränderte Winkelstellung bzw. ohne Rundlauffehler stets exakt dieselben Abstandswerte misst.

Weisen die Abstandswerte Unregelmäßigkeiten auf, insbesondere Singularitäten, so können diese entsprechend festgestellt werden, da sie periodisch detektiert werden, und ihnen kann somit auch eine Frequenz zugeordnet werden, die durch die Fourier-Transformation zu bestimmen ist. Denkbar ist auch, dass ein Mittelwert der zeitlichen bzw. positionsbezogenen Abfolge mit anschließender Differenzbildung zwischen Mittelwerten vorgenommen wird.

Je nachdem, welche Art von Fehler (Planlauffehler mit lokaler Verlagerung und/oder Verformung oder Winkelfehler mit gleichmäßiger Änderung des Abstands) vorliegt, kann dies auch zu Erkennungsmustern führen die, sofern bekannt, darüber Aufschluss geben, um welche Art von Fehler es sich handelt, ob zum Beispiel ein Bruch vorliegt und/oder ein Span verklemmt ist, wo dieser zu finden ist usw.. Zu diesem Zweck können z.B. Methoden der künstlichen Intelligenz, insbesondere das maschinelle Lernen eingesetzt werden, um die Arten der entsprechenden Fehler, sei es einen Planlauf oder einen Winkelfehler, erkennen und auswerten zu können. Auch der Einsatz neuronaler Netzwerke ist insofern möglich. Diese Maßnahme ermöglicht in vorteilhafter Weise, dass nicht nur das Auftreten eines Fehlers erkannt wird, sondern auch näher bestimmt werden kann, worin der Fehler im Eigentlichen besteht, sodass letzten Endes ein Beheben, beispielsweise gezieltes Austauschen der beschädigten Schneide bzw. sog. Schneideneinsatz, ermöglicht wird. Die Stillstandzeiten der Maschine können dadurch wesentlich verringert werden. In der Auswertungsabfolge kann beispielsweise nach entsprechenden Veränderungen im Messsignal, d.h. nach veränderten zeitlichen bzw. positionsbezogenen Abstandswerten, gesucht werden.

Zu berücksichtigen ist aber, dass jede Messung grundsätzlich auch mit Fehlern behaftet ist. Je genauer die Messungen sind und je höher die Abtastrate sind, mit der gemessen wird, desto stärker ist auch damit zu rechnen, dass auch bei einem hinreichenden Planlauf nicht über eine Umdrehung hinweg stets die gleichen Abstandswerte gemessen werden. Es ist daher vorteilhaft, Toleranzen abschätzen zu können. Insbesondere kann ein Schwellwert festgelegt werden, ab dem tatsächlich davon ausgegangen wird, dass ein kritischer Verschleiß und/oder ein Span eingeklemmt ist oder ein anderer Fehler zu einer Abweichung vom Planlauf oder vom Rundlauf beiträgt oder zu einem Winkelfehler führt, der tatsächlich auch korrigiert werden muss. Insofern können derartige Veränderungen bei den Messungen vorteilhafterweise in Bezug auf einen vorbestimmten Schwellwert verglichen werden.

Bei einem Ausführungsbeispiel der Erfindung können in der Auswertungsfolge, insbesondere in der Fourier-Transformierten bei einem der Umdrehungszahl pro Zeiteinheit der Rotoreinheit entsprechenden Frequenzwert Differenzwerte der Abstände mit einem Schwellwert verglichen werden. Im Fall des Überschreitens des Schwellwerts wird ein Planlauffehler/Rundlauffehler bzw. Winkelfehler angenommen, weil zum Beispiel ein Bruch einer einzelnen Schneide zu einer lokalen Verlagerung und/oder Verformung geführt hat.

Ferner kann bei einer Ausführungsvariante der Erfindung aus der Differenz von zwei der zeitlichen bzw. positionsbezogenen Abfolgen eine Veränderung an der Rotoreinheit bzw. der Drehachse bestimmt werden. Diese Verlagerung/Verformung kann sich zum Beispiel dahingehend auswirken, dass das Werkzeug früher oder später auf dem Werkstück aufsetzt als gedacht bzw. als von der Maschinensteuerungen vorgesehen ist. Dies kann erkannt/erfasst werden und auch entsprechend die Bearbeitungsgenauigkeit beeinflussen. Vorteilhafterweise kann eine Anschnittserkennung verwirklicht werden.

Grundsätzlich kann gemäß der Erfindung, z.B. mittels eines vorteilhaften Wirbelstromsensors, der so genau/schnell auflösen/messen kann, nicht nur die wirkende Gesamtkraft, sondern die einzelne Schneidenkraft gemessen werden kann. Dadurch kann eine kritische Erhöhung der Schneidenkraft erkannt und aktiv eingegriffen werden, bevor die zulässige Maximalkraft der Schneide und/oder des Werkzeugs erreicht wird und diese/dieses bricht. Der aktive Eingriff kann dann bspw. durch ein Zurückfahren des Werkzeuges und damit einer Entlastung der Schneide und ggf. gleichzeitiger Spülung eines Spänekanals des Werkzeuges erfolgen.

Trotz vorbeugender Maßnahmen kann es immer wieder zu einem Werkzeugbruch kommen, wenn Späne z.B. rein zufällig in der Spannut eines Fräsers oder Bohrers verkeilen. Ein Werkzeugbruch ist bislang selbst durch herkömmliche Verschleißerkennung nicht prozesssicher vorherzusagen. Insbesondere beim Tieflochbohren trat dies bislang gerade auch bei weit fortgeschrittenem Prozess auf, was in vielen Fällen zu Ausschuss führt, da bspw. der Bohrer nicht herauserodiert werden kann. Tieflochbohrungen sind in der Regel Bohrungen mit einer Tiefe größer als dem Siebenfachen des Bohrungsdurchmessers. Die Erfindung führt nun zu deutlichen Verbesserungen gerade beim bislang kritischen Tieflochbohren, jedoch auch in erheblichem Maß bei gewöhnlichen Bohrungen bzw. Fräsarbeiten oder dergleichen, wobei ein sehr frühzeitiges und/oder zeitnahes Erkennen entsprechend kritischer Zustände/Situationen des Bearbeitungsvorganges bzw. des Werkzeuges und der einzelnen Schneide/Schneiden verwirklicht werden kann.

### Ausführungsbeispiel

Ein Ausführungsbeispiel der Erfindung ist in der Zeichnung dargestellt und wird anhand der Figuren nachfolgend näher erläutert.

Im Einzelnen zeigen:
- Figur 1: eine schematische Darstellung einer ersten Werkzeugmaschineneinheit für ein Verfahren gemäß der Erfindung,
- Figur 2: eine schematische Darstellung eines Auszugs eines Prüfungsverfahrens gemäß der Erfindung zur Prüfung des Spannzustands,
- Figur 3: ein Diagramm zur Abhängigkeit der Drehzahl gegenüber der Zeit zur Darstellung des Anlaufens der Rotoreinheit,
- Figur 4: eine am Messring angebrachte, radial ausgerichtete Nut,
- Figur 5: ein Abstand-Zeit-Diagramm bei der Detektion einer Nut,
- Figur 6: eine Veranschaulichung einer Fehlerabschätzung anhand des Abstand-Zeit-Diagramms,
- Figur 7: ein schematischer, geschnittener Ausschnitt einer Motorspindel mit Radial-Sensor für ein Verfahren gemäß der Erfindung,
- Figur 8: ein schematischer, geschnittener Ausschnitt einer weiteren Motorspindel mit Axial-Sensor für ein Verfahren gemäß der Erfindung,
- Figur 9: ein schematischer Querschnitt in Richtung der Drehachse der Motorspindel gemäß Figur 8 mit zwei Axial-Sensoren für ein Verfahren gemäß der Erfindung,
- Figur 10: schematisch ein zu überwachendes Fräswerkzeug mit vier Schneiden in Draufsicht und in perspektivischer Sicht,
- Figur 11: schematisch ein Bearbeitungsprozess einer Nut, wobei durch überhöhten Vorschub ein Verklemmen der Späne provoziert wurde und
- Figur 12: eine schematische, axiale Auslenkung eines Werkzeugs mit vier Schneiden bei einer Umdrehung eines Bohrprozesses.

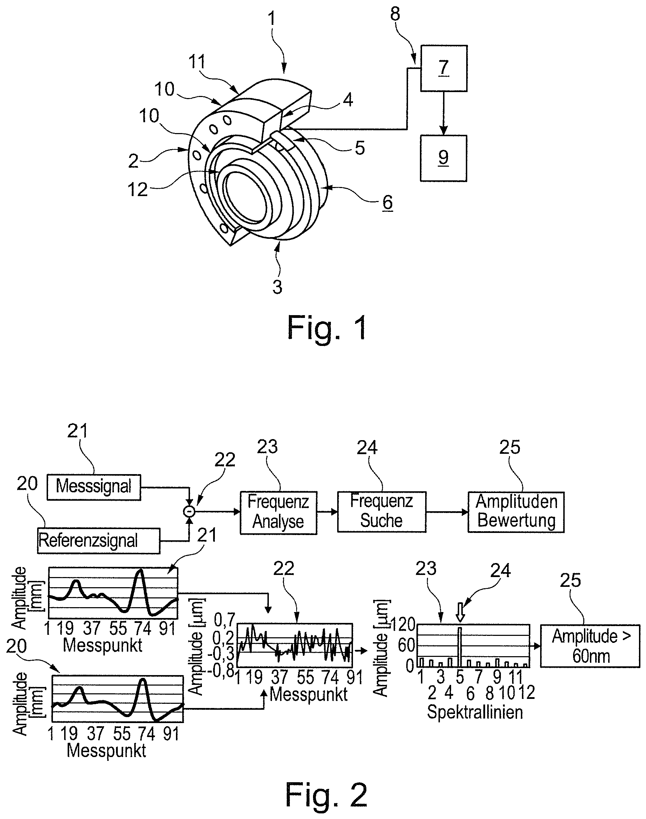

Figur 1 zeigt eine schematische Darstellung einer Werkzeugmaschineneinheit 1 mit einer Statoreinheit 2 und einer Rotoreinheit 3, wobei in Figur 1 vor allem ein Spindelkopf als Teil der Rotoreinheit 3 zu sehen ist. Die Statoreinheit 2 weist einen Ring 4 auf, an dem ein Sensorkopf in Form eines Axialsensors 5 angebracht ist. Die Rotoreinheit 3 umfasst einen Messring 6 aus einem Metall, der hier vorteilhafterweise aus einem paramagnetischen Material gefertigt ist. Der Axialsensor 5 ist so angeordnet, dass er einen Abstand zu einer stirnseitigen Fläche der Rotoreinheit 3 misst. Denkbar ist aber auch eine seitliche Messung, radial zur Drehachse. Diese Fläche, zu welcher der Abstand bestimmt wird, befindet sich auf dem Messring 6. Der Axialsensor 5 ist als Wirbelstromsensor ausgebildet, um trotz etwaiger Verschmutzungen möglichst genaue Messungen erhalten zu können.

Der Sensorkopf/Axialsensor 5 ist mit einer Elektronikeinheit 7 verbunden; beide zusammen bilden eine Prüfungsvorrichtung 8, die wiederum mit einer Maschinensteuerung 9 verbunden ist, sodass gegebenenfalls bei zu starken Planlauffehlern in die Steuerung eingegriffen werden kann.

Bei einer besonders bevorzugten Weiterbildung ist nur ein Sensorkopf 5 vorgesehen. Denkbar ist es, zusätzlich einen Triggersensor, z.B. zur Erkennung einer optischen Referenzmarkierung am Messring 6 einzusetzen, wobei ein solcher Triggersensor beispielsweise auch am Sensorring 4 angebracht werden kann. Die Markierung kann auch als Nut oder dergleichen ausgebildet sein. Mit einem derartigen Triggersensor wird nur der Initialpunkt für die Messungen getriggert, damit bei der Auswertung einfacher die Phasenbeziehungen der Messwerte zueinander festgesetzt werden können. Ein Triggersensor ist nicht zwingend notwendig und auch in Figur 1 nicht weiter dargestellt.

Die Statoreinheit 2 umfasst eine Abdeckung 10 für den Sensorring 4 und des Weiteren einen Lagerdeckel 11. An der Rotoreinheit 3 ist eine Werkzeugspannvorrichtung 12 angebracht (in Fig. 1 ist der Konusring dargestellt).

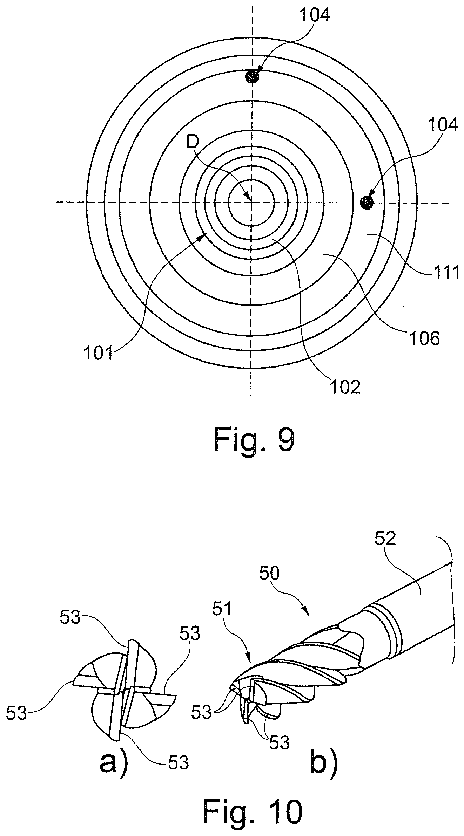

Mit den zur Verfügung stehenden Werkzeugen 50 (vgl. z.B. Figur 10), die in einen Werkzeughalter eingespannt werden, wird jeweils zunächst mit der neuen Werkzeugmaschineneinheit 1 eine Abfolge 20 von Referenzmesswerten aufgenommen. Dies kann werksseitig oder beim Kunden erfolgen. Eine Referenzmessung kann auch mit Werkzeug 50 oder Werkzeughaltern erfolgen; dies ist aber nicht ohne Weiteres notwendig, erhöht aber unter Umständen die Präzision der Messung und erleichtert gegebenenfalls die Erkennung auch kleiner Veränderungen an/mit einer Schneide 53 des Werkzeuges 50, gerade auch dann, wenn z.B. individuelle Werkzeuge 50 oder Werkzeughalter verwendet werden sollen. Im Betrieb wird dann später bei demselben Werkzeug 50 bzw. Werkzeughalter eine neue Abfolge 21 von Abstandswerten bestimmt. Beispielsweise kann wie nachfolgend Vorgegangenen werden, um Schneidenveränderungen bzw. -belastungen zu detektieren:
1. Anlauf der Spindel auf Nenndrehzahl,
1.a. Verwendung einer allgemeinen Referenz wie oben beschrieben und/oder aus/mittels einem elektronischen/elektrischen Speicher und/oder
1.b. Aufzeichnung einer Referenz, im Zeitbereich, welche nur temporär gespeichert wird, solange der Bearbeitungsprozess läuft und gegenüber diese Referenz dann der Prozess/Betrieb verglichen wird und/oder
1.c es wird (lediglich) eine Referenz FFT (s.u.) gebildet, was z.T. ausreichend ist, um Änderungen im Spektrum zu erkennen wie z.B. Rattern,
2.a. Auswertung erfolgt dann an einzelnen Umdrehungen, um Schneidenveränderungen genauer zu erkennen und/oder eine Visualisierung bzw. Anzeige zu realisieren und/oder
2.b. die Aufzeichnung erfolgt in festen Intervall. D.h. Auswertung (immer) über einen festen Intervall, z.B. alle 10ms, und/oder
2.c die Auswertung wird mittels KI verwirklicht.
3.a Das Ergebnis wird visualisiert und/oder
3.b Veränderung des Betriebes wie z.B. Veränderung/Anpassung des Vorschubs und/oder
3.c steuern des Betriebes bzw. Prozesses.

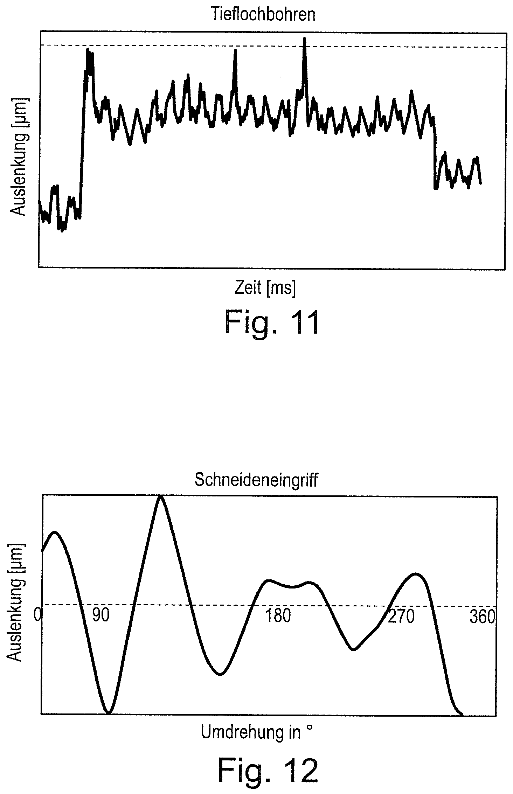

So kann ein Satz von Referenzmessungen für unterschiedliche Werkzeuge 50 oder Werkzeughalter durchgeführt werden; diese Maßnahme erhöht die Erkennungsgenauigkeit. Da die Abfolgen 20, 21 vorzugsweise bereits beim Anfahren der Maschineneinheit 1 und somit während einer Beschleunigung der Rotoreinheit 3 aufgenommen werden, müssen die Positionsangaben der jeweiligen Abstandswerte skaliert werden, um miteinander verglichen werden zu können. In Figur 2 sind die Werte entsprechend bereits für die Abfolgen 20, 21 skaliert. In Figur 2 wird die Differenz 22 gebildet. Anschließend erfolgt eine Frequenzanalyse 23 des Signals in Form einer Fourier-Transformation. Es wird überprüft (Verfahrensschritt 24), ob bei einer bestimmten Frequenz eine Abweichung vorliegt, z.B. bei der Rotationsfrequenz der Rotoreinheit 3 bzw. bei welchen Frequenzen derartige Veränderungen in Erscheinung treten. Überschreiten diese einen kritischen und/oder vorgegebenen/abgespeicherten Schwellwert K (vgl. z.B. Figur 11), liegt eine Störgröße bzw. Störung vor, z.B. ein kritischer Verschleiß einer Schneide 53, ein Bruch einer Schneide 53 oder eine Deformation infolge eines eingeklemmten Spans im Bereich einer Schneide 53 (Amplitudenbewertung: Verfahrensschritt 25).

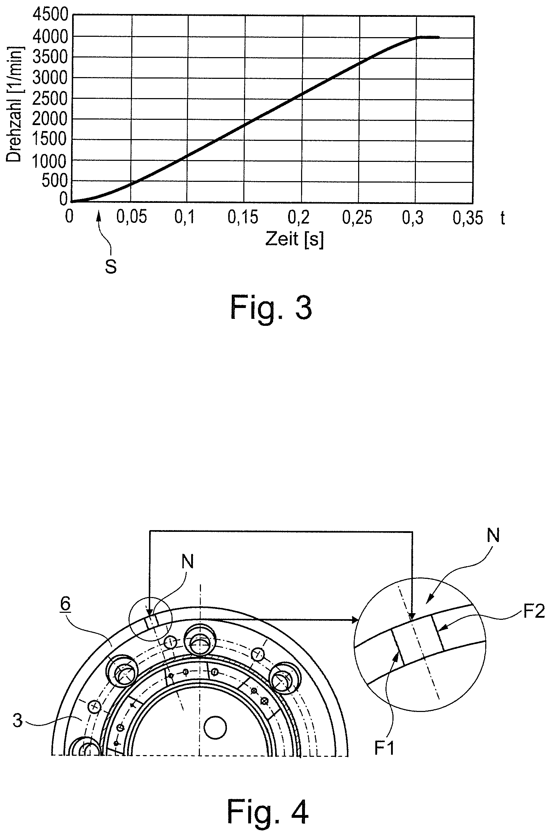

Im Serienbetrieb kann die Referenzmessung in sehr kurzen Zeitabschnitten, insbesondere nach einem Werkzeugwechsel ggf. einmalig in der ersten Anlaufphase, und die erfindungsgemäße Einzel-Schneiden-Prüfung vorzugsweise während jeder/der gesamten Bearbeitungsphase durchgeführt werden. In Figur 3 erfolgt beispielhaft in den ersten 300ms eine Beschleunigung der Rotoreinheit 3, während der bereits eine Messwerterfassung durchgeführt wird. Dargestellt ist die Drehzahl der Rotoreinheit 3 in Abhängigkeit vom zeitlichen Verlauf t. Der S-Verschliff S zeigt eine leicht linksgekrümmte Kurve, also ein langsames Anlaufen um ruckartige Bewegungen der zu vermeiden. Eine Linearisierung ist in diesem Bereich nicht sinnvoll, da die Beschleunigung nicht konstant ist und eine Näherung durch Vernachlässigung des Beschleunigungsanteils im Allgemeinen zu ungenau ist. Im Wesentlichen liegt aber sonst eine konstante Beschleunigung vor, also eine lineare Abhängigkeit der Drehzahl von der Zeit t. Kann hier kein Planlaufabweichung festgestellt werden, kann die Bearbeitung erfolgen, d.h. Werkzeug 50 und Werkezughalter sind korrekt eingespannt/montiert. Andernfalls muss aus Sicherheitsgründen gegebenenfalls abgebremst werden. Ab ca. 300ms ist für die beispielhafte Bearbeitung eine konstante Drehzahl von ca. 4000 Umdrehungen pro Minute erreicht.

In Figur 4 ist ein Schnitt durch eine Rotoreinheit 3 mit einem Messring 6 mit Nut N im Seitenbereich dargestellt. In der vergrößerten Darstellung sind die Randbereiche F1, F2 dargestellt, die als Flanken ausgebildet sein können und die bei entsprechend hoher Abtastrate erfasst werden können. Somit kann zum Beispiel eine aktuelle Drehzahl/Geschwindigkeit auch daran bestimmt werden, wann der Sensorkopf die entsprechenden Flanken am Anfang und am Ende der Nut N erfasst. Da der Winkelbereich, über den sich die Nut N erstreckt, bekannt ist, ist auch der Winkelabstand zwischen diesen beiden Flanken bekannt, sodass lediglich die Zeitspanne zwischen dem Auftreten der Flanken zu bestimmen ist.

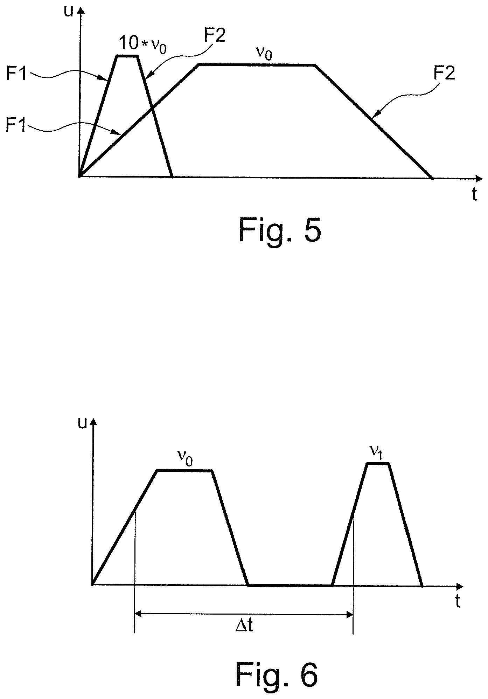

In Figur 5 sind zwei Darstellungen angegeben, bei denen der Verlauf des gemessenen Abstands u zwischen Sensorkopf 5 und Rotoreinheit 3 gezeigt ist, wenn die Nut N den Sensorkopf 5 jeweils bei unterschiedlichen Drehzahlen/Geschwindigkeiten passiert, hier einmal bei 10-facher Drehzahl/Geschwindigkeit. Im Bereich der Flanken F1, F2 ist die Abhängigkeit des Abstands u von der Zeit rampenförmig, da auch die Nut N im Bereich von F1, F2 einen rampenförmigen Verlauf zeigt. Der Verlauf ist bei höherer Drehzahl/Geschwindigkeit 10v₀ also zeitlich gestaucht.

In Figur 6 ist wiederum dargestellt, wie ein Fehler bei der der Linearisierung (Vernachlässigung des Beschleunigungsterms) bei kurzen Zeitabständen abgeschätzt werden kann.

Die gleiche Nut N wird unmittelbar zeitlich hintereinander bzgl. Ihres Abstands u vermessen. Da eine gleichmäßige Beschleunigung stattfindet, ist die spätere Vermessung der Nut N, die etwa bei der Drehzahl/Geschwindigkeit v1 stattfindet, gegenüber der vorherigen gestaucht, d.h. v1 > v0. Zwischen beiden Messereignissen liegt eine Umdrehung. In der Linearisierung wird angenommen, zwischen beiden Messereignissen läge die gleiche Drehzahl/Geschwindigkeit vor. Die Zeitspanne zwischen beiden Messereignissen ist die Zeit, die zwischen zwei Punkten der gleichen Flanke F1 (oder F2 jeweils) vorliegt, bei denen der Abstand gleich ist. Der maximale Fehler kann somit abgeschätzt werden: $Δv / Δt = \left({v}_{1}-{v}_{0}\right) / Δt .$

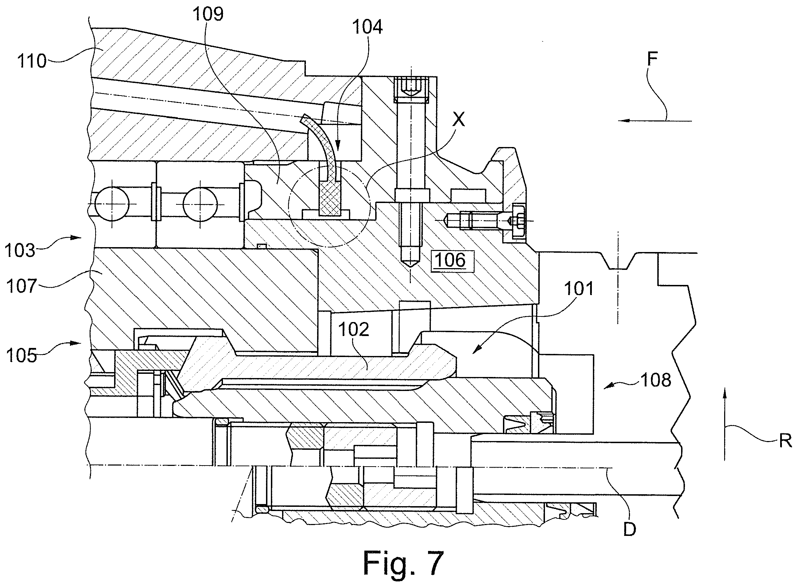

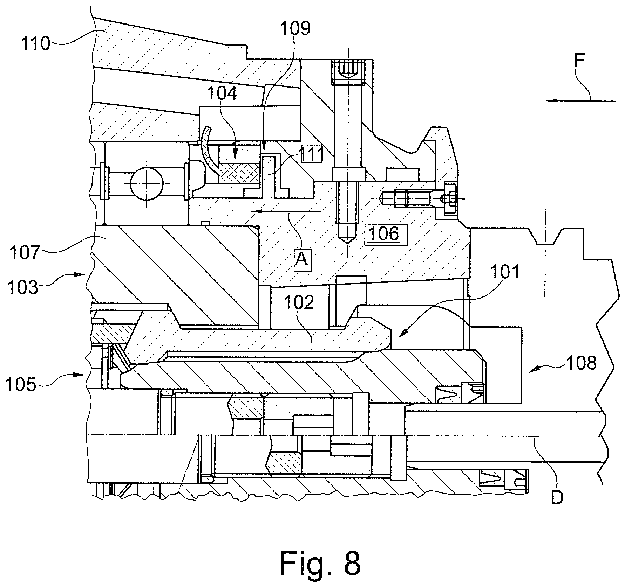

In den Figuren 7 und 8 sind zwei weitere, vorteilhafte Varianten der Erfindung dargestellt, wobei im Schnitt eine Motorspindel 3 einer Werkzeugmaschine dargestellt ist. Wie im Werkzeugmaschinenbau üblich ist eine Seite einer Spannzange 1 mit mehreren Spannsegmenten 2 im ungespannten Zustand (fast nicht dargestellten Teil) und im gespannten Zustand der Motorspindel 3 bzw. der Spannzange 1 dargestellt.

Im dargestellten, gespannten Teil der Motorspindel 3 der Figuren 7 und 8 ist ein Einzel-Schneiden-Sensor 4 gemäß der Erfindung zu erkennen. In Figur 7 weist dieser Sensor 4 einen radial ausgerichteten Wirkbereich auf und in Figur 8 einen in Drehachse D ausgerichteten Wirkbereich auf. Demzufolge ist in Figur 7 ein Radial-Sensor 4 im Sinn der Erfindung und in Figur 8 ein Axial-Sensor 4 im Sinn der Erfindung dargestellt. In den Figuren 7 und 8 ist jedoch ein optional verwendbarer, zweiter Sensor 4 gemäß der Erfindung nicht zu erkennen, da dieser, insofern verwendet, jeweils in Umfangsrichtung, insb. um 90° oder 180° etc., versetzt angeordnet wäre/ist und somit in den geschnittenen Darstellungen nicht sichtbar ist. Die Anordnung mit zwei erfindungsgemäßen Sensoren 4 ist/wäre im Querschnitt, z.B. in Figur 9, zu erkennen.

Veränderungen an den Schneiden 53 des hier in den Figuren 7 und 8 nicht näher dargestellten Werkzeuges 50 bzw. durch eine axial und/oder radial in Bezug zur Drehachse D gerichtete Belastung bzw. Kraftbeaufschlagung des Werkezuges 50 bzw. der Schneiden 53 wird ein in Figur 7 schematisch dargestellte Bereich X einer Spindelwelle 5 bzw. eines Gegenhalters 6 bzw. Anschlags/Ringelementes 6 der Motorspindel 3 in radialer Richtung R verformt bzw. geweitet. Hierbei überträgt ein Element 7 der Spindelwelle 5 eine Spannkraft F bzw. Verlagerung und/oder Verformung, d.h. Veränderung, auf das Element 6. Hierdurch verändert bzw. verkleinert sich ein Abstand 9 bzw. Luftspalt 9 zwischen Rotoreinheit bzw. Spindelwelle 5 und einer Statoreinheit 10 mit dem Radialsensor 4. Der Zustand gemäß der o.g. Referenzmessung im Bereich X ist der Soll-Zustand im Sinn der Erfindung und eine Veränderung durch Kraft-/Änderungen an den Schneiden 53 der erfassten Ist-Verlagerung und/oder Verformung bzw. der Ist-Zustand wird entsprechend in vorteilhafter Weise zur Kontrolle/Steuerung der Motorspindel 3 verwendet, d.h. vorzugsweise zur einzelnen Schneiden-Überwachung bzw. Schneiden-Prüfung.

In Figur 8 ist eine axial ausgerichtete Verformung eines Messarmes 11 mit dem Axial-Sensor 4 bzw. eine axiale Änderung A des Abstandes 9 erfassbar und weiter verarbeitbar. Diese axiale Änderung A wird wiederum durch eine Kraft-/Änderungen F an den Schneiden 53 bzw. axiale und/oder radiale Verformung/Veränderung an den Schneiden 53 des Werkzeuges 50, die übertragen wird auf die Werkzeugaufnahmeeinheit 8 und auf das Element 6.

In Figur 9 ist sehr schematisch ein Querschnitt durch die Variante gemäß Figur 8 dargestellt, wobei die optionale Anordnung zweier Sensoren 4 verdeutlicht wird. Diese beiden Sensoren 4, ebenso wie auch nicht näher dargestellte zwei radial orientierte Sensoren 4 gemäß Figur 7, sind in Umfangsrichtung vorzugsweise um 90° oder 180° versetzt angeordnet. Aufgrund der Belastung der einzelnen Schneiden hervorgerufene symmetrische oder unsymmetrische Verlagerungen und/oder Verformungen/Veränderungen des Gegenhalters 6 bzw. Anschlags/Ringelementes 6 der Motorspindel 3 und/oder der Werkzeugaufnahmeeinheit 8 können durch die beiden Sensoren 4 erfasst und in vorteilhafter Weise bewertet/ausgewertet werden.

In Figur 10 ist schematisch ein handelsübliches Werkzeug 50 bzw. Fräser 50 dargestellt. Dieses weist einen Werkzeugkopf 51 mit hier beispielhaft vorhandenen vier einzelnen Schneiden 53 und einen Werkzeugschaft 52 auf. Der Werkzeugschaft 52 wird üblicherweise in einen nicht näher dargestellten Werkzeughalter gehalten und in die Werkzeugaufnahme eingeführt.

Figur 12 zeigt beispielhaft eine axiale Auslenkung eines Werkzeugs 50 mit vier Schneiden 53, wie z.B. des Fräsers 50 gemäß Figur 10, bei einer Umdrehung eines Bohrprozesses. Man sieht hier deutlich vier Peaks der Auslenkung, die die vier Schneiden 53 auslösen. Ein Peak ist hier etwas abgeflacht, was auf eine etwas schlechtere Schneide 53 bzw. einen gewissen Verschleiß deutet.

In Figur 11 ist beispielhaft zur Veranschaulichung ein Bearbeitungsprozess einer Nut dargestellt, bei welchem durch überhöhten Vorschub ein Verklemmen der Späne provoziert wurde. Man sieht dies im mittleren Bereich an den zwei sehr hohen Peaks. Beispielhaft ist in Figur 11 ein vorgegebener/kritischer Schwellwert K in das Schaubild eingezeichnet, der vom zweiten, besonders hohen Peak überschritten wurde. Dies soll veranschaulichen, dass z.B. ein abgespeicherter Schwellwert K als Soll-Zustand/-Wert vorgegeben werden kann und der beim Überschreiten wie in Figur 11 beispielhaft dargestellt zu einer Maschinenreaktion und/oder zu einem vorteilhaften Signalisieren bzw. Anzeigen/Alarmieren führen kann. Hierdurch kann z.B. ein nachteiliges Verklemmen von ggf. zu großen Spänen an der Bearbeitungsstelle bzw. an einer der Schneiden 53 zu einem unverzüglichen Stopp und/oder Alarm führen, so dass ein Bruch des Werkzeuges 50 oder einer der Schneiden 53 oder eine ungenaue Bearbeitung des Werkstückes wirkungsvoll verhinderbar ist.

### Bezugszeichenliste

- 1: Werkzeugmaschineneinheit
- 2: Statoreinheit
- 3: Rotoreinheit
- 4: Sensorring
- 5: Axialsensor
- 6: Messring
- 7: Elektronikeinheit
- 8: Prüfungsvorrichtung
- 9: Maschinensteuerung
- 10: Abdeckung
- 11: Lagerdeckel
- 12: Konusring / Werkzeugspannvorrichtung
- 20: Referenzsignal
- 21: Messsignal
- 22: Differenzoperator
- 23: Frequenz-Analyse
- 24: Frequenzsuche
- 25: Amplitudenbewertung
- 50: Werkzeug
- 51: Werkzeugkopf
- 52: Werkzeugschaft
- 53: Schneide
- 101: Spannzange
- 102: Spannzangenelement
- 103: Motorspindel
- 104: Sensor
- 105: Spindelwelle
- 106: Anschlag
- 107: Element
- 108: Werkzeugaufnahmeeinheit
- 109: Abstand
- 110: Statoreinheit
- 111: Messarm

- A: Änderung
- a: Beschleunigung
- D: Drehachse
- F: Kraft
- F1, F2: Flanken an Nut-Rändern
- K: Schwellwert
- N: Nut
- R: Richtung
- t: Zeit
- u: Abstand
- v₀: Drehzahl/Geschwindigkeit
- X: Bereich
- Δφ: Phasenunterschied

## Patentansprüche

1. Verfahren zur Erfassung einer Schneidenbelastung einer einzelnen Schneide (53) eines Werkzeugs (50), wobei ein Werkzeugkopf (51) des Werkzeuges (50) mit wenigstens einer Schneide (53), vorzugsweise wenigstens zwei oder vier Schneiden (53), verwendet wird, wobei das Werkzeug (50) und/oder ein Werkzeughalter zum Halten des Werkzeugs (50) insbesondere lösbar fixiert mit einer Werkzeugspannvorrichtung (12, 101, 108) einer Werkzeugaufnahmeeinheit (108) einer Rotoreinheit (3, 105) von einer motorisch angetriebenen Werkzeugmaschineneinheit (1, 103) aufgenommen wird, wobei insbesondere die Werkzeugspannvorrichtung (12, 108) beim Verspannen des Werkzeugs (50) in Längsrichtung der Drehachse (D) verstellt und/oder in einem Spindelkopf und/oder der Werkzeugaufnahmeeinheit (108) der Rotoreinheit (3) angeordnet wird, wobei die Werkzeugmaschineneinheit eine Statoreinheit (2, 110) aufweist, gegenüber der die Rotoreinheit (3, 105) um die Drehachse (D) drehbar gelagert ist, wobei wenigstens ein Werkzeugsensor (5, 104) zur Erfassung der Belastung des Werkzeuges (50) verwendet wird, wobei der Werkzeugsensor (5, 104) als Einzel-Schneiden-Sensor (5, 104) zur Erfassung einer Schneidenbelastung der einzelnen Schneide oder Schneiden (53) ausgebildet ist wobei das Verfahren folgende Verfahrensschritte umfasst:
• Anordnung des Einzel-Schneiden-Sensors (5, 104) an der Statoreinheit (2, 110),
• Bereitstellen wenigstens eines Sensorkopfes (5, 104) des Einzel-Schneiden-Sensor (5, 104) zur Bestimmung eines Abstandes (109, u) zwischen Statoreinheit (2, 110) und/oder Sensorkopf (5, 104) und wenigstens einem Teil der Rotoreinheit (3, 105) und/oder der Werkzeugaufnahmeeinheit (108) oder des Spindelkopfes, wobei dieser Abstand (109, u) durch die Schneidenbelastung der einzelnen Schneide oder Schneiden (53) verändert wird,
• Messung des Abstands (109, u) von einem Teil der Rotoreinheit (3, 105) und/oder der Werkzeugaufnahmeeinheit (108) oder des Spindelkopfes, **gekennzeichnet durch**
• eine Aufnahme wenigstens einer zeitlichen und/oder positionsbezogenen Abfolge (20, 21) der mit dem Einzel-Schneiden-Sensor (5, 104) und/oder Sensorkopf (5, 104) gemessenen Abstandswerte,
• eine Bestimmung einer Planlaufabweichung und/oder einer Rundlaufabweichung und/oder einer Winkeländerung und/oder eines Torsionsmomentes ausschließlich unter Berücksichtigung der zeitlichen und/oder positionsbezogenen Abfolge der gemessenen Abstandswerte (109, u) zum Teil der/des relativ zum Einzel-Schneiden-Sensor (5, 104) und/oder Sensorkopf (5, 104) rotierenden Rotoreinheit (3, 105) oder Werkzeugaufnahmeeinheit (108) oder Spindelkopfes,
• wobei eine Markierung (N) an der Rotoreinheit (3, 105) und/oder Werkzeugaufnahmeeinheit (108) oder Spindelkopf, bereitgestellt wird,
• wobei der Einzel-Schneiden-Sensor (5, 104) und/oder Sensorkopf (5, 104) die Markierung (N) an der Rotoreinheit (3, 105) beim Messen erfasst,
• wobei anhand der Erfassung der Markierung (N) durch den Einzel-Schneiden-Sensor (5, 104) und/oder Sensorkopf (5, 104) die aktuelle Drehzahl bzw. Geschwindigkeit (v0, v1) der Rotoreinheit (3, 105) erfasst wird.

2. Verfahren zur Erfassung der Schneidenbelastung nach dem vorgenannten Anspruch, **dadurch gekennzeichnet, dass** die aktuelle Drehzahl bzw. Geschwindigkeit (v0) der Rotoreinheit (3, 105) anhand der Markierung (N) bestimmt wird, indem:
• als Markierung (N) eine solche bereitgestellt wird, die einen bestimmten Winkelabschnitt der Rotoreinheit (3, 105) bei der Rotation markiert, und die Zeit bestimmt wird, welche der Sensorkopf (5, 104) benötigt, damit die Markierung (N) bei bekanntem Winkelabschnitt den Einzel-Schneiden-Sensor (5, 104) und/oder Sensorkopf (5, 104) passiert und/oder
• die Zeit zwischen zwei aufeinanderfolgenden Detektionen der Markierung (N) durch den Einzel-Schneiden-Sensor (5, 104) und/oder Sensorkopf (5, 104) gemessen wird.

3. Verfahren zur Erfassung der Schneidenbelastung nach einem der vorgenannten Ansprüche, **dadurch gekennzeichnet, dass** als Markierung (N) eine Nut (N) verwendet wird, sodass der Bereich außerhalb der Nut (N) und innerhalb der Nut (N) unterschiedliche Abstandswerte (109, u) aufweisen.

4. Verfahren zur Erfassung der Schneidenbelastung nach einem der vorgenannten Ansprüche, **dadurch gekennzeichnet, dass** eine zeitliche und/oder positionsbezogene Abfolge (20, 21) von Abstandswerten (109, u), die als Referenzmessung verwendet wird, bei idealem oder normalem Schneidenzustand, insbesondere vor einem ersten Bearbeitungsvorgang durch die Werkzeugmaschineneinheit (1, 103) und/oder nach einem Reinigungsvorgang, vorzugsweise individuell für jedes verwendete Werkzeug (50), aufgenommen wird.

5. Verfahren zur Erfassung der Schneidenbelastung nach einem der vorgenannten Ansprüche, **dadurch gekennzeichnet, dass** die Markierung (N) als Initialpunkt verwendet und den Abfolgen von Abstandswerten der Initialpunkt für die Auswertung zugeordnet wird, um insbesondere bei einer Differenzbildung (22) und/oder einer Fourier-Transformation (23) die Abstandwerte von unterschiedlichen Abfolgen (20, 21) einander zuordnen zu können.

6. Verfahren zur Erfassung der Schneidenbelastung nach einem der vorgenannten Ansprüche, **dadurch gekennzeichnet, dass** mittels wenigstens einer der folgenden Berechnungen eine Auswertungsabfolge von Werten bestimmt wird:
• eine Differenzbildung (22) zwischen zwei der zeitlichen Abfolgen (20, 21) und anschließend eine Fourier-Transformation (23), insbesondere eine diskrete Fourier-Transformation, vorzugsweise eine FFT und/oder eine DFT, der zuvor gebildeten Differenz der ersten und zweiten zeitlichen und/oder positionsbezogenen Abfolge (20 ,21) und/oder
• eine Fourier-Transformation, insbesondere eine diskrete Fourier-Transformation, vorzugsweise eine FFT und/oder DFT, jeweils der Abfolgen und anschließend eine Differenzbildung zwischen den jeweils Fourier-transformierten zeitlichen Abfolgen (20, 21) und/oder
• Bildung des Mittelwerts der zeitlichen und/oder positionsbezogenen Abfolgen mit anschließender Differenzbildung zwischen den Mittelwerten.

7. Verfahren zur Erfassung der Schneidenbelastung nach einem der vorgenannten Ansprüche, **dadurch gekennzeichnet, dass** die Auswertungsabfolge nach einer Abweichung oder wenigstens zwei Abweichungen durchsucht wird (24, 25), die einen vorgegebenen Schwellwert (K) überschreiten und im Fall des Überschreitens des Schwellwertes (K) eine Schneidenänderung, insbesondere ein Schneidenverschleiß und/oder ein Schneidenbruch und/oder eine Schneiden- oder Spannverklemmung angenommen wird.

8. Verfahren zur Erfassung der Schneidenbelastung nach einem der vorgenannten Ansprüche, **dadurch gekennzeichnet, dass** in der Auswertungsfolge, insbesondere in einer Fourier-Transformierten bei einem der Umdrehungszahl pro Zeiteinheit der Rotoreinheit (3, 105) entsprechenden Frequenzwert der Differenzwert der Abstände (109, u) mit einem Schwellwert (K) verglichen wird und im Fall des Überschreitens des Schwellwertes (K) eine Schneidenänderung, insbesondere ein Schneidenverschleiß und/oder ein Schneidenbruch und/oder eine Schneiden- oder Spannverklemmung angenommen wird.

9. Verfahren zur Erfassung der Schneidenbelastung nach einem der vorgenannten Ansprüche, **dadurch gekennzeichnet, dass** die Bestimmung, ob eine Schneidenänderung, insbesondere ein Schneidenverschleiß und/oder ein Schneidenbruch und/oder eine Schneiden- oder Spannverklemmung vorliegt/vorliegen, durch Anwendung von künstlicher Intelligenz durchgeführt wird, indem insbesondere durch maschinelles Lernen von den Abfolgen (20, 21) auf den Fehler und/oder die Änderung geschlossen wird.

## Claims

1. Method for detecting a blade load of a single blade (53) of a tool (50), wherein a tool head (51) of the tool (50) having at least one blade (53), preferably at least two or four blades (53), is used, wherein the tool (50) and/or a tool holder for holding the tool (50) is received by a motor-driven machine tool unit (1, 103), in particular releasably fixed using a tool clamping device (12, 108) of a tool receptacle unit (108) of a rotor unit (3, 105), wherein in particular the tool clamping device (12, 101, 108) is adjusted in the longitudinal direction of the axis of rotation (D) during the clamping of the tool (50) and/or is arranged in a spindle head and/or the tool receptacle unit (108) of the rotor unit (3), wherein the machine tool unit has a stator unit (2, 110), in relation to which the rotor unit (3, 105) is mounted rotatably around the axis of rotation (D), wherein at least one tool sensor (5, 104) is used to detect the load on the tool (50), wherein the tool sensor (5, 104) is designed as a single-blade sensor (5, 104) for detecting a blade load on the single blade or blades (53), wherein the method comprises the following method steps:
• arranging the single-blade sensor (5, 104) on the stator unit (2, 110),
• providing at least one sensor head (5, 104) of the single-blade sensor (5, 104) for determining a distance (109, u) between stator unit (2, 110) and/or sensor head (5, 104) and at least a part of the rotor unit (3, 105) and/or of the tool receptacle unit (108) or of the spindle head, wherein this distance (109, u) is changed by the blade load of the single blade or blades (53),
• measuring the distance (109, u) from a part of the rotor unit (3, 105) and/or of the tool receptacle unit (108) or of the spindle head, **characterized by**
• recording at least one chronological and/or position-related sequence (20, 21) of the distance values measured by the single-blade sensor (5, 104) and/or sensor head (5, 104),
• determining an axial runout deviation and/or a radial runout deviation and/or an angle change and/or a torsion torque exclusively in consideration of the chronological and/or position-related sequence of the measured distance values (109, u) partially of the rotor unit (3, 105) or tool receptacle unit (108) or spindle head rotating relative to the single-blade sensor (5, 104) and/or sensor head (5, 104),
• wherein a marking (N) is provided on the rotor unit (3, 105) and/or tool receptacle unit (108) or spindle head,
• wherein the single-blade sensor (5, 104) and/or sensor head (5, 104) detects the marking (N) on the rotor unit (3, 105) during the measurement,
• wherein the current rotational speed or speed (v0, v1) of the rotor unit (3, 105) is detected on the basis of the detection of the marking (N) by the single-blade sensor (5, 104) and/or sensor head (5, 104).

2. Method for detecting the blade load according to the preceding claim, **characterized in that** the current rotational speed or speed (v0) of the rotor unit (3, 105) is determined on the basis of the marking (N) **in that**:
• a marking (N) is provided which marks a specific angular section of the rotor unit (3, 105) during the rotation and the time is determined, which is required by the sensor head (5, 104) in order that the marking (N) passes the single-blade sensor (5, 104) and/or sensor head (5, 104) in the case of a known angular section and/or
• the time between two successive detections of the marking (N) by the single-blade sensor (5, 104) and/or sensor head (5, 104) is measured.

3. Method for detecting the blade load according to any one of the preceding claims, **characterized in that** a groove (N) is used as marking (N), such that the area outside the groove (N) and inside the groove (N) have different distance values (109, u).

4. Method for detecting the blade load according to any one of the preceding claims, **characterized in that** a chronological and/or position-related sequence (20, 21) of distance values (109, u), which is used as a reference measurement, is recorded in an ideal or normal blade state, in particular before a first machining process by the machine tool unit (1, 103) and/or after a cleaning process, preferably individually for each tool (50) used.

5. Method for detecting the blade load according to any one of the preceding claims, **characterized in that** the marking (N) is used as an initial point and the initial point is assigned to the sequences of distance values for the evaluation in order to be able to assign the distance values of different sequences (20, 21) to one another, in particular in a subtraction (22) and/or a Fourier transform (23).

6. Method for detecting the blade load according to any one of the preceding claims, **characterized in that** an evaluation sequence of values is determined by means of at least one of the following calculations:
• a subtraction (22) between two of the chronological sequences (20, 21) and then a Fourier transform (23), in particular a discrete Fourier transform, preferably an FFT and/or a DFT, of the previously formed difference of the first and second chronological and/or position-related sequence (20, 21) and/or
• a Fourier transform, in particular a discrete Fourier transform, preferably an FFT and/or DFT, of each of the sequences, and subsequently a subtraction between the respective Fourier-transformed chronological sequences (20, 21) and/or
• formation of the mean value of the chronological and/or position-related sequences with subsequent subtraction between the mean values.

7. Method for detecting the blade load according to any one of the preceding claims, **characterized in that** the evaluation sequence is searched for a deviation or at least two deviations (24, 25) which exceed a predefined threshold value (K) and, in case of the threshold value (K) being exceeded, a blade change, in particular a blade wear and/or a blade break and/or a blade or chip jamming is assumed.

8. Method for detecting the blade load according to any one of the preceding claims, **characterized in that**, in the evaluation sequence, in particular in a Fourier transform, at a frequency value corresponding to the number of revolutions per time unit of the rotor unit (3, 105), the difference value of the distances (109, u) is compared with a threshold value (K) and, in case of the threshold value (K) being exceeded, a blade change, in particular a blade wear and/or a blade break and/or a blade or chip jamming is assumed.

9. Method for detecting the blade load according to any one of the preceding claims, **characterized in that** the determination of whether a a blade change, in particular a blade wear and/or a blade break and/or a blade or chip jamming is/are present, is carried out by using artificial intelligence by inferring the error and/or the change, in particular by machine learning from the sequences (20, 21).

## Revendications

1. Procédé de détection d'une charge exercée sur une arête de coupe individuelle (53) d'un outil (50), dans lequel une tête d'outil (51) de l'outil (50) comportant au moins une arête de coupe (53), de préférence au moins deux ou quatre arêtes de coupe (53), est utilisée, dans lequel l'outil (50) et/ou un porte-outil destiné à maintenir l'outil (50) sont reçus, notamment fixés de manière amovible, par un dispositif de serrage d'outil (12, 101, 108) d'une unité de réception d'outil (108) d'une unité de rotor (3, 105) d'une unité de machine-outil (1, 103) entraînée par un moteur, dans lequel, notamment, le dispositif de serrage d'outil (12, 108) est déplacé dans la direction longitudinale de l'axe de rotation (D) lors du serrage de l'outil (50) et/ou est disposé dans une tête de broche et/ou dans l'unité de réception d'outil (108) de l'unité de rotor (3), dans lequel l'unité de machine-outil comporte une unité de stator (2, 110) par rapport à laquelle l'unité de rotor (3, 105) est montée rotative autour de l'axe de rotation (D), dans lequel au moins un capteur d'outil (5, 104) destiné à détecter la charge exercée sur l'outil (50) est utilisé, dans lequel le capteur d'outil (5, 104) est conçu comme un capteur d'arête de coupe individuelle (5, 104) destiné à détecter une charge exercée sur la ou les arêtes de coupe individuelles (53), dans lequel le procédé comprend les étapes de procédé suivantes :
• la disposition du capteur d'arête de coupe individuelle (5, 104) sur l'unité de stator (2, 110),
• la mise à disposition d'au moins une tête de capteur (5, 104) du capteur d'arête de coupe individuelle (5, 104) pour déterminer une distance (109, u) entre l'unité de stator (2, 110) et/ou la tête de capteur (5, 104) et au moins une partie de l'unité de rotor (3, 105) et/ou de l'unité de réception d'outil (108) ou de la tête de broche, dans lequel cette distance (109, u) est modifiée par la charge exercée sur la ou les arêtes de coupe individuelles (53),
• la mesure de la distance (109, u) par rapport à une partie de l'unité de rotor (3, 105) et/ou de l'unité de réception d'outil (108) ou de la tête de broche, **caractérisé par**
• l'enregistrement d'au moins une séquence temporelle et/ou relative à la position (20, 21) des valeurs de distance mesurées au moyen du capteur d'arête de coupe individuelle (5, 104) et/ou de la tête de capteur (5, 104),
• la détermination d'un écart de battement axial et/ou d'un écart de battement radial et/ou d'une variation angulaire et/ou d'un couple de torsion en tenant compte exclusivement de la séquence temporelle et/ou relative à la position des valeurs de distance (109, u) mesurées par rapport à la partie de l'unité de rotor (3, 105) ou de l'unité de réception d'outil (108) ou de la tête de broche tournant par rapport au capteur d'arête de coupe individuelle (5, 104) et/ou à la tête de capteur (5, 104),
• dans lequel un repère (N) est prévu sur l'unité de rotor (3, 105) et/ou l'unité de réception d'outil (108) ou la tête de broche,
• dans lequel le capteur d'arête de coupe individuelle (5, 104) et/ou la tête de capteur (5, 104) détectent le repère (N) sur l'unité de rotor (3, 105) lors de la mesure,
• dans lequel la vitesse de rotation ou la vitesse (v0, v1) actuelle de l'unité de rotor (3, 105) est détectée sur la base de la détection du repère (N) par le capteur d'arête de coupe individuelle (5, 104) et/ou la tête de capteur (5, 104).

2. Procédé de détection de la charge exercée sur une arête de coupe selon la revendication précédente, **caractérisé en ce que** la vitesse de rotation ou la vitesse (v0) actuelle de l'unité de rotor (3, 105) est déterminée à l'aide du repère (N) par :
• la mise à disposition, en tant que repère (N), d'un repère qui marque un secteur angulaire déterminé de l'unité de rotor (3, 105) lors de la rotation, et la détermination du temps nécessaire à la tête de capteur (5, 104) pour que le repère (N), dont le secteur angulaire est connu, passe devant le capteur d'arête de coupe individuelle (5, 104) et/ou la tête de capteur (5, 104), et/ou
• la mesure du temps entre deux détections successives du repère (N) par le capteur d'arête de coupe individuelle (5, 104) et/ou la tête de capteur (5, 104).

3. Procédé de détection de la charge exercée sur une arête de coupe selon l'une des revendications précédentes, **caractérisé en ce qu'**une rainure (N) est utilisée comme repère (N), de sorte que la zone à l'extérieur de la rainure (N) et la zone à l'intérieur de la rainure (N) présentent des valeurs de distance (109, u) différentes.

4. Procédé de détection de la charge exercée sur une arête de coupe selon l'une des revendications précédentes, **caractérisé en ce qu'**une séquence temporelle et/ou relative à la position (20, 21) de valeurs de distance (109, u), utilisée comme mesure de référence, est enregistrée lorsque l'état des arêtes de coupe est idéal ou normal, notamment avant une première opération d'usinage par l'unité de machine-outil (1, 103) et/ou après une opération de nettoyage, de préférence individuellement pour chaque outil (50) utilisé.

5. Procédé de détection de la charge exercée sur une arête de coupe selon l'une des revendications précédentes, **caractérisé en ce que** le repère (N) est utilisé comme point initial et que le point initial est associé aux séquences de valeurs de distance pour l'évaluation, afin de pouvoir mettre en correspondance les valeurs de distance de différentes séquences (20, 21), notamment lors d'un calcul de différence (22) et/ou d'une transformation de Fourier (23).

6. Procédé de détection de la charge exercée sur une arête de coupe selon l'une des revendications précédentes, **caractérisé en ce qu'**une séquence de valeurs d'évaluation est déterminée au moyen d'au moins un des calculs suivants :
• un calcul de différence (22) entre deux des séquences temporelles (20, 21), suivi d'une transformation de Fourier (23), notamment d'une transformation de Fourier discrète, de préférence d'une FFT et/ou d'une DFT, de la différence précédemment calculée entre les première et deuxième séquences temporelles et/ou relatives à la position (20, 21), et/ou
• une transformation de Fourier, notamment une transformation de Fourier discrète, de préférence une FFT et/ou une DFT, de chacune des séquences, suivie d'un calcul de différence entre les séquences temporelles (20, 21) respectivement transformées par Fourier, et/ou
• un calcul de la moyenne des séquences temporelles et/ou relatives à la position, suivi d'un calcul de différence entre les moyennes.

7. Procédé de détection de la charge exercée sur une arête de coupe selon l'une des revendications précédentes, **caractérisé en ce que** la séquence de valeurs d'évaluation est examinée (24, 25) à la recherche d'un écart ou d'au moins deux écarts dépassant une valeur seuil prédéfinie (K) et qu'en cas de dépassement de la valeur seuil (K), une modification d'arête de coupe, notamment une usure d'arête de coupe et/ou une rupture d'arête de coupe et/ou un coincement d'arête de coupe ou de copeaux, est supposée.

8. Procédé de détection de la charge exercée sur une arête de coupe selon l'une des revendications précédentes, **caractérisé en ce que**, dans la séquence de valeurs d'évaluation, notamment dans une transformée de Fourier, à une valeur de fréquence correspondant au nombre de tours par unité de temps de l'unité de rotor (3, 105), la valeur de différence des distances (109, u) est comparée à une valeur seuil (K) et qu'en cas de dépassement de la valeur seuil (K), une modification d'arête de coupe, notamment une usure d'arête de coupe et/ou une rupture d'arête de coupe et/ou un coincement d'arête de coupe ou de copeaux, est supposée.

9. Procédé de détection de la charge exercée sur une arête de coupe selon l'une des revendications précédentes, **caractérisé en ce que** la détermination de la présence d'une modification d'arête de coupe, notamment d'une usure d'arête de coupe et/ou d'une rupture d'arête de coupe et/ou d'un coincement d'arête de coupe ou de copeaux, est effectuée par application de l'intelligence artificielle, notamment en déduisant le défaut et/ou la modification à partir des séquences (20, 21) par apprentissage automatique.
